# EUROPEAN PATENT APPLICATION

(11) **EP 4 319 471 A1**
(43) Date of publication of application: **07.02.2024**
(21) Application number: 23185880.4
(22) Date of filing: 17.07.2023
(51) Int. Cl.: H04W 76/40, H04W 4/06, H04W 72/30, H04W 76/27

(54) **METHOD OF USER EQUIPMENT RECEIVING MULTICAST MULTICAST/BROADCAST SERVICE DATA, UE, AND METHOD OF A CELL PROVIDING A MULTICAST MULTICAST/BROADCAST SERVICE DATA**

(30) Priority: 03.08.2022 US 202263394625 P; 30.06.2023 US 202318344895
(71) Applicant: Acer Incorporated, New Taipei City 221 (TW)
(72) Inventor: LIN, Jung-Mao, c/o Acer Incorporated, New Taipei City 221, Taiwan ( R.O.C.) (TW)
(74) Representative: Haseltine Lake Kempner LLP

(57) **Abstract**

The embodiments of the disclosure provide a method of UE (100) receiving MBS data, UE (100), and a method of a cell providing an MBS data. The method includes: receiving (S210) a multicast MBS configuration, wherein the multicast MBS configuration is associated with an MBS provided by a first cell; and in response to determining that the UE in an unconnected state camping on the first cell, receiving (S220), from the first cell, the MBS data of the MBS provided by the first cell based on the multicast MBS configuration.

## Description

### BACKGROUND

### 1. Field of the Invention

The present disclosure generally relates to a communication technology, in particular, to a method of user equipment (UE) receiving multicast multicast/broadcast service (MBS) data, UE, and a method of a cell providing an MBS data.

### 2. Description of Related Art

In release 17 (R-17) of the 5G communication system, the radio access network (RAN) only specifies multicast for UEs in RRC_CONNECTED state, which may not fully fulfil the requirements of, e.g., Mission Critical Services, especially for cells with a large number of UEs.

Also, to always keep UEs in RRC _CONNECTED state is not power efficient. It is therefore important to support multicast for UEs in unconnected state (e.g., RRC_INACTIVE or RRC_IDLE).

In R-17 multicast MBS configuration is delivered to UE by dedicated signal, and only the connected mode UE could get the multicast MBS configuration in R-17.

Therefore, once the unconnected (e.g., inactive or idle) UE reselects to another cell, the UE needs to enter connected mode to acquire the multicast MBS configuration from camping cell.

### SUMMARY OF THE INVENTION

Accordingly, the disclosure is directed to a method of UE receiving MBS data, UE, and a method of a cell providing an MBS data, which may be used to solve the above technical problems.

The embodiments of the disclosure provide a method of user equipment (UE) receiving a multicast multicast/broadcast service (MBS) data, including: receiving a multicast MBS configuration, wherein the multicast MBS configuration is associated with an MBS provided by a first cell; and in response to determining that the UE in an unconnected state camping on the first cell, receiving, from the first cell, the MBS data of the MBS provided by the first cell based on the multicast MBS configuration.

The embodiments of the disclosure provide user equipment (UE), including a transceiver and a processor. The processor is coupled to the transceiver and performs: controlling the transceiver to receive a multicast multicast/broadcast service (MBS) configuration, wherein the multicast MBS configuration is associated with an MBS provided by a first cell; and in response to determining that the UE in an unconnected state camping on the first cell, controlling the transceiver to receive, from the first cell, an MBS data of the MBS provided by the first cell based on the multicast MBS configuration.

The embodiments of the disclosure provide a method of a cell providing a multicast multicast/broadcast service (MBS) data, including: transmitting a multicast MBS configuration, wherein the multicast MBS configuration is associated with an MBS provided by the cell; and transmitting the MBS data of the MBS provided by the cell based on the multicast MBS configuration to user equipment (UE) in an unconnected state camping on the cell.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the disclosure.
FIG. 1 shows a functional block diagram of UE according to an embodiment of the disclosure.
FIG. 2 shows a flow chart of the method of UE receiving an MBS data according to an embodiment of the disclosure.
FIG. 3 shows a schematic diagram of the Multicast-MCCH according to an embodiment of the disclosure.
FIG. 4 shows an application scenario according to an embodiment of the disclosure.
FIG. 5A shows an application scenario according to an embodiment of the disclosure.
FIG. 5B shows an application scenario according to validity handling of the disclosure.
FIG. 6 shows an application scenario according to invalidity handling of the disclosure.
FIG. 7 shows the enhanced RA procedure according to embodiments of the disclosure.
FIG. 8A shows the enhanced RA procedure according to an embodiment of the disclosure.
FIG. 8B shows the enhanced RA procedure according to an embodiment of the disclosure.
FIG. 8C shows the enhanced RA procedure according to an embodiment of the disclosure.
FIG. 9A shows the enhanced RA procedure according to an embodiment of the disclosure.
FIG. 9B shows the enhanced RA procedure according to an embodiment of the disclosure.
FIG. 10A shows the enhanced RA procedure according to an embodiment of the disclosure.
FIG. 10B shows the enhanced RA procedure according to an embodiment of the disclosure.
FIG. 11 shows an application scenario according to an embodiment of the disclosure.
FIG. 12A shows an application scenario according to an embodiment of the disclosure.
FIG. 12B shows an application scenario according to an embodiment of the disclosure.
FIG. 13 shows an application scenario according to an embodiment of the disclosure.
FIG. 14 shows the enhanced RA procedure according to embodiments of the disclosure.
FIG. 15A shows the enhanced RA procedure according to an embodiment of the disclosure.
FIG. 15B shows the enhanced RA procedure according to an embodiment of the disclosure.
FIG. 15C shows the enhanced RA procedure according to an embodiment of the disclosure.
FIG. 16A shows the enhanced RA procedure according to an embodiment of the disclosure.
FIG. 16B shows the enhanced RA procedure according to an embodiment of the disclosure.
FIG. 17A shows the enhanced RA procedure according to an embodiment of the disclosure.
FIG. 17B shows the enhanced RA procedure according to an embodiment of the disclosure.
FIG. 18A shows the procedure for updating the multicast MBS configuration according to an embodiment of the disclosure.
FIG. 18B shows the procedure for updating the multicast MBS configuration according to an embodiment of the disclosure.
FIG. 18C shows the procedure for updating the multicast MBS configuration according to an embodiment of the disclosure.
FIG. 18D shows the procedure for updating the multicast MBS configuration according to an embodiment of the disclosure.
FIG. 18E shows the procedure for updating the multicast MBS configuration according to an embodiment of the disclosure.
FIG. 19A shows the preparation of entering the unconnected state according to an embodiment of the disclosure.
FIG. 19B shows the preparation of entering the unconnected state according to an embodiment of the disclosure.
FIG. 20 shows a flow chart of the method of a cell providing an MBS data according to an embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

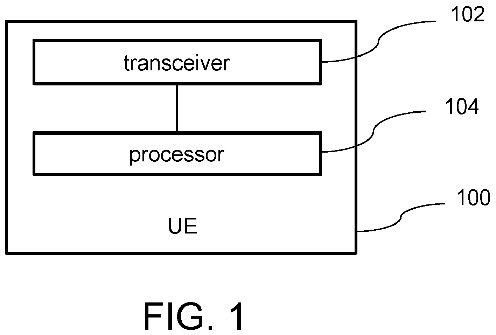

See FIG. 1, which shows a functional block diagram of UE according to an embodiment of the disclosure. In FIG. 1, the UE 100 includes a transceiver 102 and a processor 104. The transceiver 102 may be configured for transmitting and receiving signals from other devices within a coverage area thereof. The transceiver 102 is capable of performing analog to digital signal conversion (ADC), digital to analog signal conversion (DAC), modulation, demodulation, signal amplification, low-pass filtering, and bandpass filtering. For example, the transceiver 102 is configured to provide information on a received signal to the processor 104, modulating data received from the processor 104 into a modulated signal, and transmitting the modulated signal to other devices.

In some embodiments, the UE 100 may further include other elements, such as an antenna module for implementing the aforementioned functions of the transceiver 102 and the processor 104.

The processor 104 may be coupled with the storage circuit 102, and the processor 104 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like.

In the embodiments of the disclosure, the processor 104 may access particular modules and/or program codes to implement the method of UE receiving an MBS data provided in the disclosure, which would be further discussed in the following.

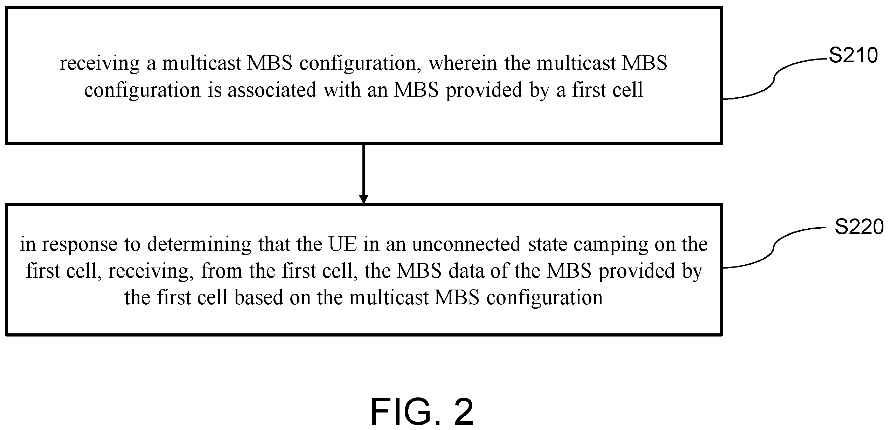

See FIG. 2, which shows a flow chart of the method of UE receiving an MBS data according to an embodiment of the disclosure. The method of this embodiment may be executed by the UE 100 in FIG. 1, and the details of each step in FIG. 2 will be described below with the components shown in FIG. 1.

In step S210, the processor 104 controls the transceiver 102 to receive a multicast MBS configuration, wherein the multicast MBS configuration is associated with an MBS provided by a first cell.

In the embodiments of the disclosure, the first cell may be a first base station (e.g., a gNB) currently serving the UE 100 (e.g., the base station where the UE 100 currently camps), but the disclosure is not limited thereto.

In step S220, in response to determining that the UE 100 in an unconnected state camping on the first cell, the processor 104 controls the transceiver 102 to receive, from the first cell, the MBS data of the MBS provided by the first cell based on the multicast MBS configuration.

In various embodiments, the procedure of performing steps S210 and S220 can be different, which would be discussed in the following. Noted that the descriptions of the processor 104 receives/transmits any data/information in the following can be understood as an abbreviation for the processor 104 controlling the transceiver 102 to receive/transmit the considered data/information. For similar principle, the descriptions of the UE 100 receives/transmits any data/information in the following can be also understood as an abbreviation for the processor 104 controlling the transceiver 102 to receive/transmit the considered data/information, but the disclosure is not limited thereto.

In an embodiment, in the procedure of performing step S210, the processor 104 can receive multicast-MBS Control Channel (MCCH) scheduling information and receive the multicast MBS configuration according to the multicast-MCCH scheduling information.

In the embodiment, the multicast-MCCH scheduling information may carry the scheduling information of Multicast-MCCH, and the scheduling information of the multicast-MCCH may at least include the information of repeat period or modification period.

In addition, the multicast-MCCH may carry the multicast MBS Configuration message which indicates the MBS multicast sessions that are provided in the cell, the corresponding scheduling related information for these sessions as well as the multicast MBS configuration.

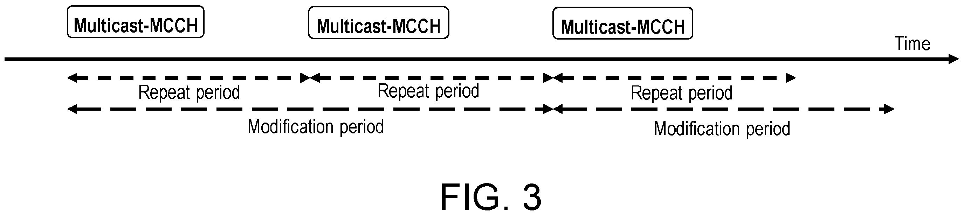

See FIG. 3, which shows a schematic diagram of the Multicast-MCCH according to an embodiment of the disclosure. In FIG. 3, the multicast-MCCH message may be the same within the same modification period. In one embodiment, the length of a modification period may be greater than or equal to the length of the repeat period.

In one embodiment, the UE 100 may try to acquire the multicast-MCCH at least once in each modification period. In another embodiment, the UE 100 may try to acquire the multicast-MCCH once the UE 100 gets a change notification (which would be discussed in a third embodiment of the disclosure).

In the embodiment, the processor 104 may receive, from a second cell, the multicast-MCCH scheduling information via a dedicated message in a connected state (e.g., an RRC connected state, wherein RRC stands for radio resource control), wherein the second cell serves the UE in the connected state.

In the following embodiments of the disclosure, the UE 100 may be assumed to be served by the second cell when the UE 100 is in the connected state. Afterwards, the UE 100 may switch to an unconnected state (e.g., an RRC inactive state or an RRC idle state) and camps on the first cell due to moving to the coverage of the first cell. In this case, the second cell can be understood as the last serving cell of the UE 100, and the first cell can be understood as the camping cell of the UE 100. In some embodiments, the first cell and the second cell can be the same cell, but the disclosure is not limited thereto.

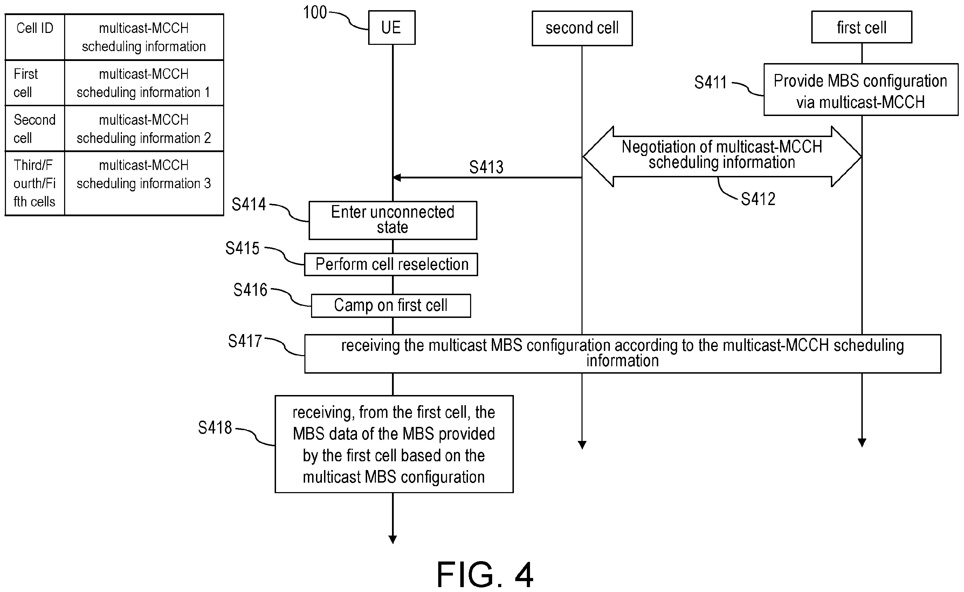

See FIG. 4, which shows an application scenario according to an embodiment of the disclosure. In FIG. 4, the first cell can provide the MBS configuration via multicast-MCCH in step S411. In step S412, the first cell and the second cell may perform the negotiation of multicast-MCCH scheduling information.

In FIG. 4, when the UE 100 is in the connected state, the processor 104 may receive, from the second cell, the multicast-MCCH scheduling information via a dedicated message in step S413. In one embodiment, the dedicated message may be an RRC release message.

In other embodiments, the dedicated message may be other kind of signals, such as an RRC reconfiguration message. In this case, the processor 104 may firstly receive the dedicated message including the multicast-MCCH scheduling information from the second cell, and then receive the RRC release message, but the disclosure is not limited thereto.

In one embodiment, the second cell can further include the multicast-MCCH scheduling information for neighbor cells of the second cell in the dedicated message, wherein the neighbor cells of the second cell may be the subset of RAN Notification Area (RNA).

In FIG. 4, assuming that the first cell and the third/fourth/fifth cells are the neighbor cells of the second cell (e.g., these cells belong to the same RNA), the dedicated message from the second cell to the UE 100 can not only include the multicast-MCCH scheduling information for the second cell (e.g., the multicast-MCCH scheduling information 2 in FIG. 4), but can also include the multicast-MCCH scheduling information for the first cell (e.g., the multicast-MCCH scheduling information 1 in FIG. 4) and the multicast-MCCH scheduling information for the third/fourth/fifth cells (e.g., the multicast-MCCH scheduling information 3 in FIG. 4), but the disclosure is not limited thereto.

In step S414, the UE 100 can enter (e.g., switch) the unconnected state. Next, the UE 100 may perform the cell selection in step S415 and camp on the first cell in step S416 due to, for example, moving into the coverage of the first cell.

In step S417, the UE 100 receives the multicast MBS configuration according to the multicast-MCCH scheduling information, which may be the multicast-MCCH scheduling information previously received in step S413.

In one embodiment, the UE 100 may monitor an MCCH based on the multicast-MCCH scheduling information, wherein the MCCH carries the multicast MBS configuration. Next, the UE 100 may receive the multicast MBS configuration via the MCCH. Since the UE 100 has entered the unconnected state in step S414, the UE 100 can be understood as receiving, from the first cell, the multicast MBS configuration according to the multicast-MCCH scheduling information during the UE 100 being in the unconnected state.

In some embodiments, the multicast-MCCH scheduling information may include the contents as shown in the following Table 1.

**Table 1**

| contents | explanations |
|---|---|
| Multicast-mcch-RepetitionPeriodAndOffset | Defines the length and the offset of the Multicast MCCH repetition period. |
| Multicast-mcch-WindowStartSlot | Indicates the slot in which Multicast MCCH transmission window starts. |
| Multicast-mcch-WindowDuration | Indicates, starting from the slot indicated by Multicast-mcch-WindowStartSlot, the duration in slot during which Multicast MCCH may be scheduled. |
| Multicast-mcch-ModificationPeriod | Defines periodically appearing boundaries, i.e., radio frames for which SFN mod Multicast-mcch-ModificationPeriod = 0. |
| multicast-MCCH-RNTI | multicast-MCCH-RNTI used to scramble the scheduling and transmission of Multicast-mcch. |

In some embodiments, the multicast MBS configuration may include the contents as shown in the following Table 2.

**Table 2**

| contents | explanations |
|---|---|
| mbs-SessionInfoList | Provides the configuration of each MBS session provided by MBS Multicast in the current cell. |
| drx-ConfigPTM-List | Used to configure DRX for PTM transmission |
| pdsch-ConfigMTCH | Provides parameters for acquiring the PDSCH for Multicast-MTCH. |
| MRB-InfoMulticast | Provides the configuration of the Multicast MRB |
| Multicast-mcch-Scheduling | Provides parameters for acquiring the Multicast-mcch message |

In step S418, the UE 100 receives, from the first cell, the MBS data of the MBS provided by the first cell based on the multicast MBS configuration.

Accordingly, the UE 100 can continue to receive the MBS data after camping on the first cell and does not need to switch to the connected state for acquiring information such as the multicast-MCCH scheduling information, which is more power efficient to the UE 100.

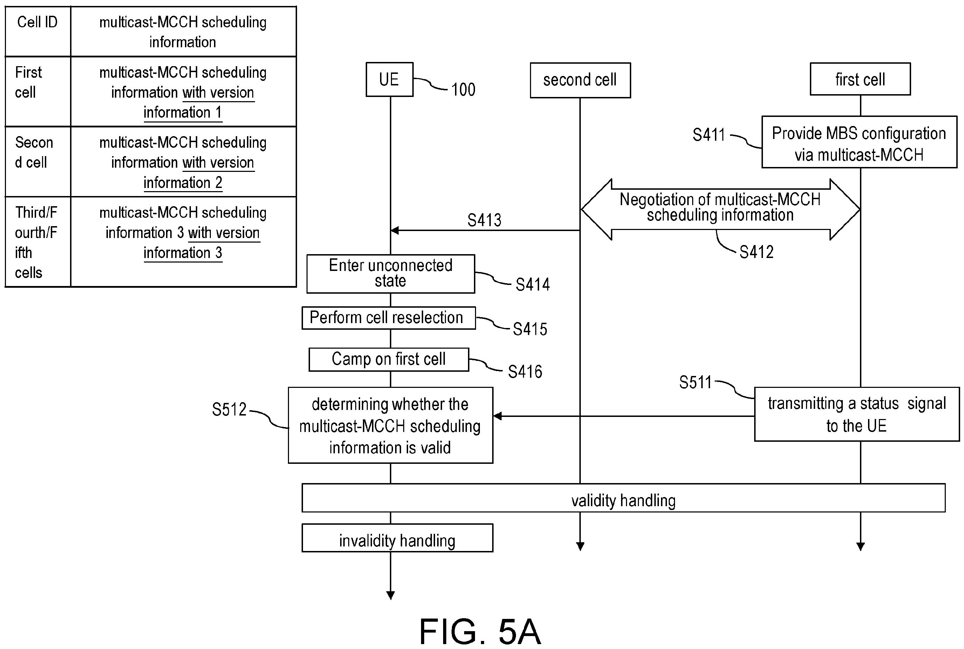

See FIG. 5A, which shows an application scenario according to an embodiment of the disclosure. In the embodiment, the UE 100, the first/second cell may perform the corresponding steps S411 to S416, and the associated details can be referred to the descriptions associated with FIG. 4, which would not be repeated herein.

In the embodiment, the UE 100 may additionally check the validity of the multicast-MCCH scheduling information associated with the first cell before receiving the multicast MBS configuration according to the multicast-MCCH scheduling information.

In various embodiments, the UE 100 may perform corresponding operations according to the determination result of the validity of the multicast-MCCH scheduling information.

Specifically, in FIG. 5A, the first cell may transmit a status signal to the UE 100 in step S511, wherein the status signal may include a reference multicast-MCCH scheduling information associated with the MBS, and the status signal may be received by the UE 100. In one embodiment, the first cell may transmit the status signal by using broadcasting and/or unicasting, but the disclosure is not limited thereto.

In one embodiment, the status of the multicast-MCCH scheduling information may be the version information of the multicast-MCCH scheduling information and/or the cell identification of the first cell.

In some embodiments, each cell may transmit (e.g., broadcast) the status of the corresponding multicast-MCCH scheduling information. Taking FIG. 5A as an example, the status of the multicast-MCCH scheduling information from the first cell may include the multicast-MCCH scheduling information with version information 1. The status of the multicast-MCCH scheduling information from the second cell may include the multicast-MCCH scheduling information with version information 2, and the status of the multicast-MCCH scheduling information from the third/fourth/fifth cells may include the multicast-MCCH scheduling information with version information 3, but the disclosure is not limited thereto.

In step S512, the UE 100 may determine whether the multicast-MCCH scheduling information is valid. If the multicast-MCCH scheduling information is valid, the UE 100 may subsequently perform validity handling. On the other hand, if the multicast-MCCH scheduling information is invalid, the UE 100 may subsequently perform invalidity handling.

In one embodiment, in response to determining that a status of the multicast-MCCH scheduling information (which may be the multicast-MCCH scheduling information received in step S413) is consistent with the status of the reference multicast-MCCH scheduling information, the UE 100 may determine that the multicast-MCCH scheduling information is valid. On the other hand, in response to determining that the status of the multicast-MCCH scheduling information is not consistent with the status of the reference multicast-MCCH scheduling information, the UE 100 may determine that the multicast-MCCH scheduling information is invalid, but the disclosure is not limited thereto.

In one embodiment, if the stored version information does not match the broadcasted status of the multicast-MCCH scheduling information from the first cell, the UE 100 may consider the stored multicast-MCCH scheduling information (e.g., the multicast-MCCH scheduling information received in step S413) is invalid. On the other hand, if the stored version information matches the broadcasted status of the multicast-MCCH scheduling information from the first cell, the UE 100 may consider the stored multicast-MCCH scheduling information is valid.

In another embodiment, if the cell ID list of the multicast-MCCH scheduling information does not include the cell ID of the first cell, the UE 100 may consider the stored multicast-MCCH scheduling information is invalid. On the other hand, if the cell ID list of the multicast-MCCH scheduling information includes the cell ID of the first cell, the UE 100 may consider the stored multicast-MCCH scheduling information is valid, but the disclosure is not limited thereto.

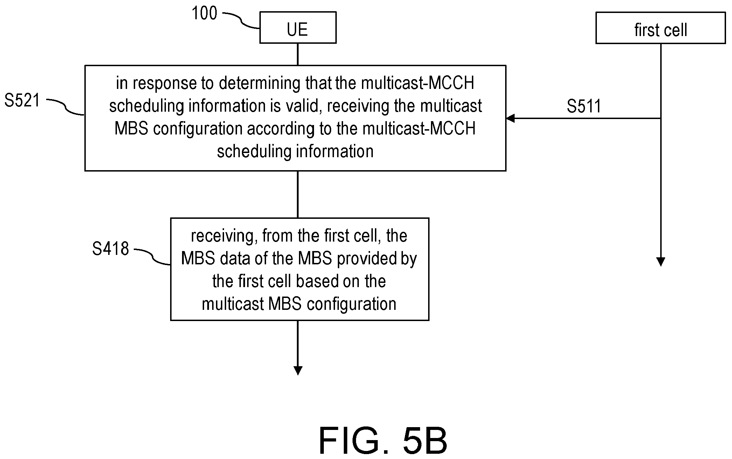

See FIG. 5B, which shows an application scenario according to validity handling of the disclosure. In FIG. 5B, after the UE 100 receives the (broadcasted) status signal of the multicast-MCCH scheduling information in step S511, the UE 100 may determine whether the multicast-MCCH scheduling information is valid.

In step S521, in response to determining that the multicast-MCCH scheduling information is valid, the UE 100 may receive the multicast MBS configuration according to the multicast-MCCH scheduling information. Next, the UE 100 may receive, from the first cell, the MBS data of the MBS provided by the first cell based on the multicast MBS configuration.

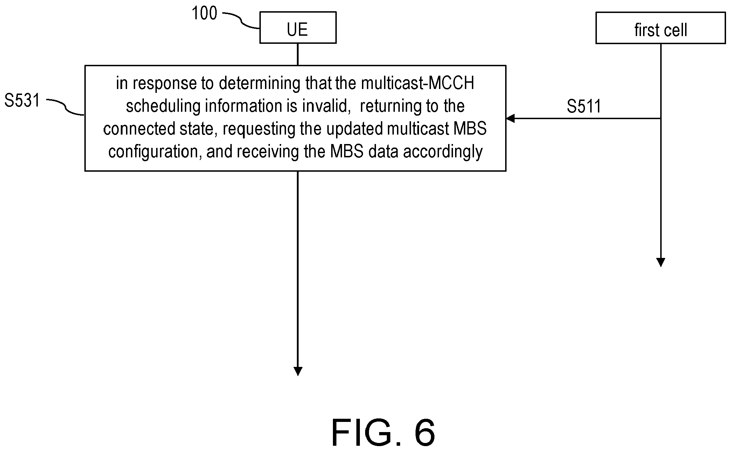

See FIG. 6, which shows an application scenario according to invalidity handling of the disclosure. In FIG. 6, after the UE 100 receives the (broadcasted) status signal of the multicast-MCCH scheduling information in step S511, the UE 100 may determine whether the multicast-MCCH scheduling information is valid.

In step S531, in response to determining that the multicast-MCCH scheduling information is invalid, the UE 100 may return to the connected state, request the new/updated multicast MBS configuration, and receive the MBS data accordingly. That is, the UE 100 may return to the RRC connected state with the first cell and request the first cell to provide the updated multicast MBS configuration. With the updated multicast MBS configuration, the UE 100 may accordingly receive the MBS data from the first cell, but the disclosure is not limited thereto.

In an embodiment, in response to determining that the multicast-MCCH scheduling information is invalid, the UE 100 applies/updates the multicast-MCCH scheduling information via an enhanced random access (RA) procedure and accordingly receives the multicast MBS configuration.

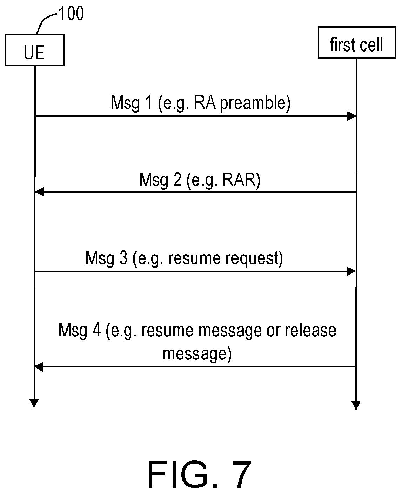

See FIG. 7, which shows the enhanced RA procedure according to embodiments of the disclosure. In the enhanced RA procedure of FIG. 7, the UE 100 may initiate the enhanced RA procedure by sending a Msg 1 (e.g., an RA preamble) to the first cell, and the UE 100 may receive, from the first cell, a Msg 2 (e.g., an RA response (RAR)) corresponding to the Msg 1.

Next, the UE 100 may transmit a Msg 3 (e.g., a resume request) to the first cell, and the UE 100 may receive, from the first cell, a Msg 4 (e.g., a resume message or a release message) corresponding to the Msg 3.

In an embodiment, in response to determining that the stored multicast-MCCH scheduling information is invalid, the UE 100 requests the first cell to provide the reference multicast-MCCH scheduling information by using a reserved RA resource. The reserved RA resource may be exclusively used to request the reference multicast-MCCH scheduling information. In some embodiments, the reserved RA resource includes at least one of a first reserved random access preamble and a reserved random access occasion, but the disclosure is not limited thereto.

Next, the UE 100 may receive the reference multicast-MCCH scheduling information from the first cell via at least one of the RA response (e.g., Msg 2), the resume message, and the release message corresponding to the reserved RA resource. That is, when the first cell receives Msg 1 via the reserved RA resource, the first cell may use at least one of the RA response (e.g., Msg 2), the resume message, and the release message to provide the reference multicast-MCCH scheduling information to the UE 100. Afterwards, the UE 100 applies the reference multicast-MCCH scheduling information (e.g., updates the multicast-MCCH scheduling information based on the reference multicast-MCCH scheduling information) while staying in the unconnected state. That is, the UE 100 would not switch to the connected state in response to the enhanced RA procedure.

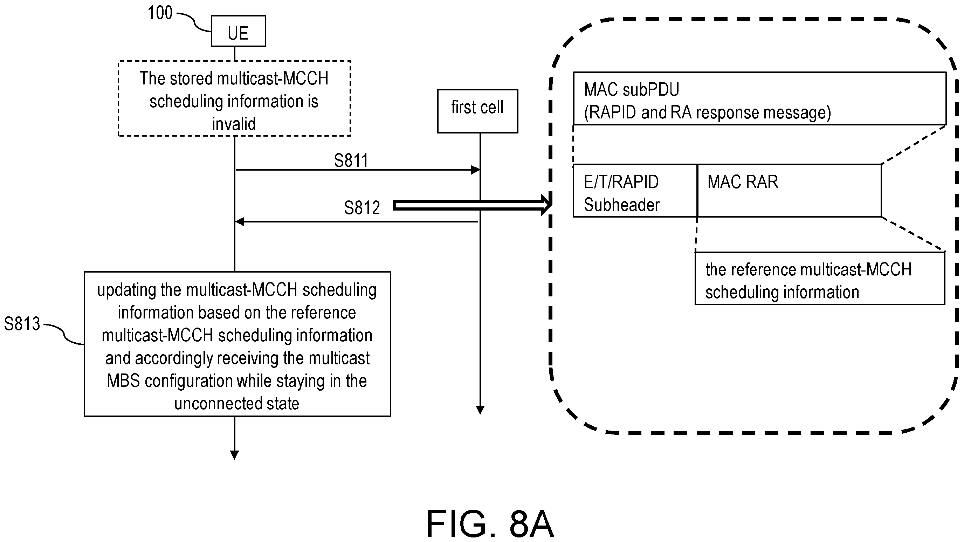

In the disclosure, the embodiments of using the RA response, the resume message, and the release message to carry the reference multicast-MCCH scheduling information would be respectively discussed with FIG. 8A to FIG. 8C.

See FIG. 8A, which shows the enhanced RA procedure according to an embodiment of the disclosure. In FIG. 8A, in response to determining that the stored multicast-MCCH scheduling information is invalid, the UE 100 may request the first cell to provide the reference multicast-MCCH scheduling information by using the reserved RA resource in step S811. In the present embodiment, the reserved RA resource may be the first reserved RA preamble, which may be exclusively used for requesting the reference multicast-MCCH scheduling information. That is, the UE 100 may send the first reserved RA preamble to the first cell to request the reference multicast-MCCH scheduling information.

In the present embodiment, the reserved RA resource may be the reserved RA occasion, and the UE 100 may send Msg 1 at the reserved RA occasion, which may be exclusively used for requesting the reference multicast-MCCH scheduling information, but the disclosure is not limited thereto.

In step S812, the UE 100 receives the RAR from the first cell, wherein the RAR in the present embodiment may carry the reference multicast-MCCH scheduling information (which can be regarded as the updated multicast-MCCH scheduling information), and the structure of the RAR can be referred to the right part of FIG. 8A.

In step S813, the UE 100 applies the reference multicast-MCCH scheduling information (e.g., updates the multicast-MCCH scheduling information based on the reference multicast-MCCH scheduling information) and accordingly receives the multicast MBS configuration while staying in the unconnected state. In one embodiment, the UE 100 may not perform contention resolution.

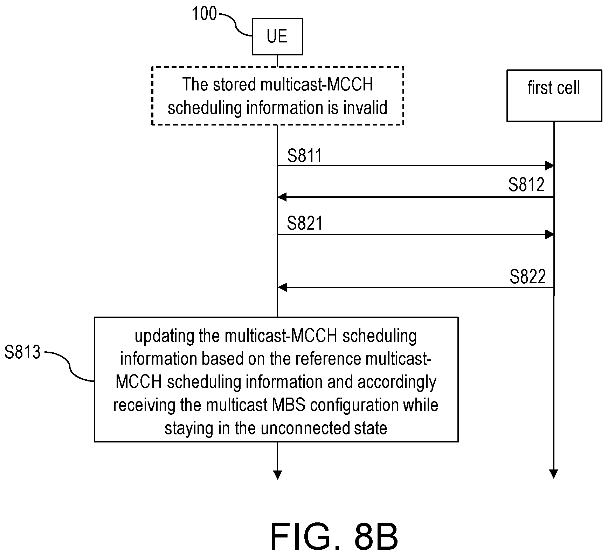

See FIG. 8B, which shows the enhanced RA procedure according to an embodiment of the disclosure. In FIG. 8B, in response to determining that the stored multicast-MCCH scheduling information is invalid, the UE 100 may request the first cell to provide the reference multicast-MCCH scheduling information by using the reserved RA resource in step S811, and the details thereof may be referred to the descriptions associated with FIG. 8A, which would not be repeated herein.

In step S812, the UE 100 receives the RAR from the first cell. In step S821, the UE 100 transmits the Msg 3 to the first cell.

In step S822, the UE 100 receives the Msg 4 corresponding to the Msg 3 from the first cell, wherein the Msg 4 in the present embodiment may be the resume message (e.g., an RRC resume message), and the resume message may carry the reference multicast-MCCH scheduling information (which can be regarded as the updated multicast-MCCH scheduling information).

With the reference multicast-MCCH scheduling information, the UE 100 can accordingly perform step S813, and the details thereof may be referred to the descriptions associated with FIG. 8A, which would not be repeated herein. In one embodiment, the UE 100 may not perform contention resolution.

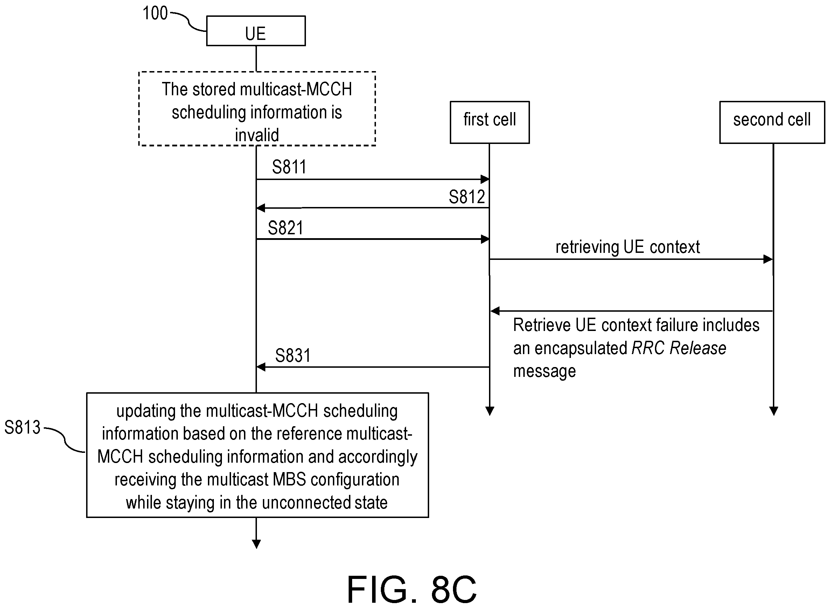

See FIG. 8C, which shows the enhanced RA procedure according to an embodiment of the disclosure. In FIG. 8C, in response to determining that the stored multicast-MCCH scheduling information is invalid, the UE 100 may request the first cell to provide the reference multicast-MCCH scheduling information by using the reserved RA resource in step S811, and the details thereof may be referred to the descriptions associated with FIG. 8A, which would not be repeated herein.

In step S812, the UE 100 receives the RAR from the first cell. In step S821, the UE 100 transmits the Msg 3 to the first cell.

In the present embodiment, in response to the Msg 3, the first cell may send a request to the second cell (e.g., the last serving cell of the UE 100) for retrieving the UE context associated with the UE 100. In FIG. 8C, the second cell may send the retrieve UE context failure message including an encapsulated release message (e.g., an RRC release message), and the first cell may send the release message to the UE 100 as the Msg 4.

In step S831, the UE 100 receives the Msg 4 corresponding to the Msg 3 from the first cell, wherein the Msg 4 in the present embodiment may be the release message (e.g., the RRC release message), and the release message may carry the reference multicast-MCCH scheduling information (which can be regarded as the updated multicast-MCCH scheduling information).

With the reference multicast-MCCH scheduling information, the UE 100 can accordingly perform step S813, and the details thereof may be referred to the descriptions associated with FIG. 8A, which would not be repeated herein. In one embodiment, the UE 100 may not perform contention resolution.

In an embodiment, in response to determining that the stored multicast-MCCH scheduling information is invalid, the UE 100 transmits an RA preamble (e.g., Msg 1) to the first cell and receives an RAR (e.g., Msg 2) corresponding to the RA preamble from the first cell, wherein the RA preamble and the corresponding RAR may be regular RA preamble and regular RAR in the present embodiment.

Next, the UE 100 transmits a resume request (e.g., Msg 3) to the first cell, wherein the resume request requests the first cell to provide the reference multicast-MCCH scheduling information.

That is, the UE 100 requests the first cell to provide the reference multicast-MCCH scheduling information by using Msg 3 in the present embodiment, rather than using Msg 1.

Afterwards, the UE 100 receives the reference multicast-MCCH scheduling information from the first cell via at least one of the resume message and the release message corresponding to the resume request. That is, since the UE 100 uses Msg 3 to request the reference multicast-MCCH scheduling information, the first cell cannot use Msg 2 to provide the reference multicast-MCCH scheduling information, but can only use Msg 4 to provide the reference multicast-MCCH scheduling information.

With the reference multicast-MCCH scheduling information, the UE 100 can apply the reference multicast-MCCH scheduling information (e.g., update the multicast-MCCH scheduling information based on the reference multicast-MCCH scheduling information) while staying in the unconnected state.

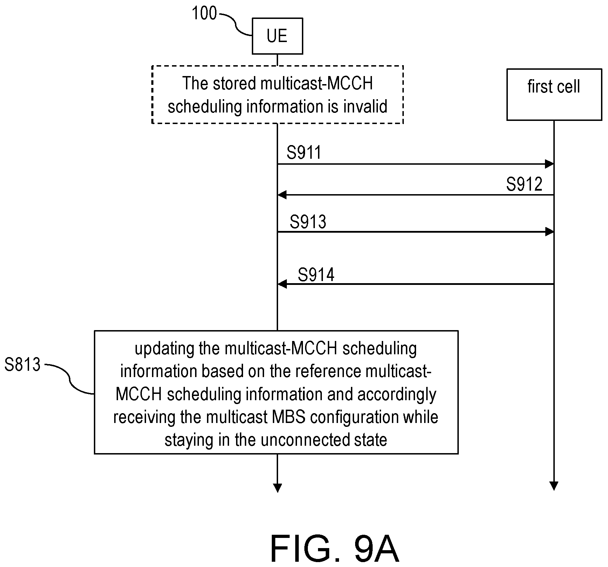

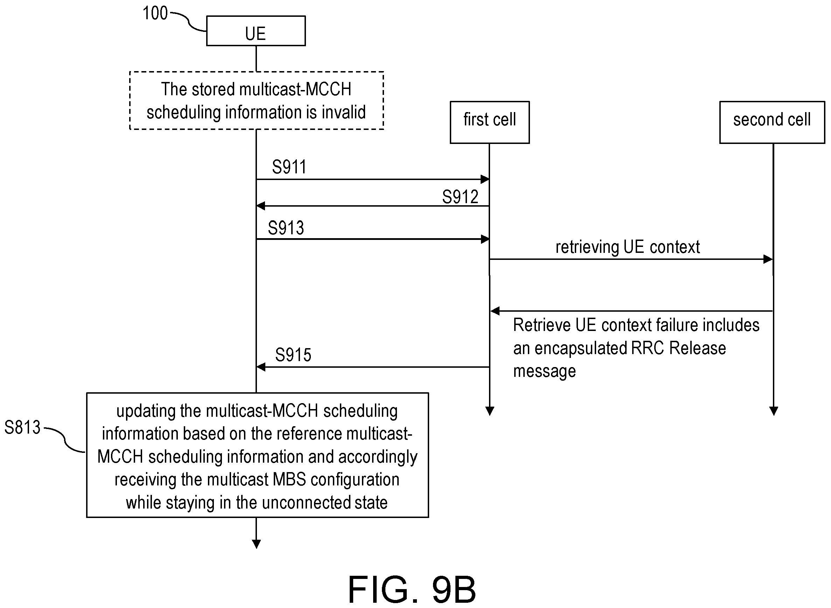

In an embodiment, the embodiments of using the resume message and the release message to carry the reference multicast-MCCH scheduling information would be respectively discussed with FIG. 9A and FIG. 9B.

See FIG. 9A, which shows the enhanced RA procedure according to an embodiment of the disclosure. In FIG. 9A, in response to determining that the stored multicast-MCCH scheduling information is invalid, the UE 100 transmits an RA preamble (e.g., Msg 1) to the first cell in step S911 and receives an RAR (e.g., Msg 2) corresponding to the RA preamble from the first cell in step S912.

In step S913, the UE 100 transmits a resume request (e.g., Msg 3) to the first cell, wherein the resume request requests the first cell to provide the reference multicast-MCCH scheduling information.

In step S914, the UE 100 receives the reference multicast-MCCH scheduling information from the first cell via the resume message (e.g., the RRC resume message) corresponding to the resume request, wherein the resume message carries the reference multicast-MCCH scheduling information.

With the reference multicast-MCCH scheduling information, the UE 100 can accordingly perform step S813, and the details thereof may be referred to the descriptions associated with FIG. 8A, which would not be repeated herein. In one embodiment, the UE 100 may not perform contention resolution.

See FIG. 9B, which shows the enhanced RA procedure according to an embodiment of the disclosure. In FIG. 9B, in response to determining that the stored multicast-MCCH scheduling information is invalid, the UE 100 transmits an RA preamble (e.g., Msg 1) to the first cell in step S911 and receives an RAR (e.g., Msg 2) corresponding to the RA preamble from the first cell in step S912.

In step S913, the UE 100 transmits the resume request (e.g., Msg 3) to the first cell, wherein the resume request requests the first cell to provide the reference multicast-MCCH scheduling information.

In the present embodiment, in response to the Msg 3, the first cell may send a request to the second cell (e.g., the last serving cell of the UE 100) for retrieving the UE context associated with the UE 100. In FIG. 9B, the second cell may send the retrieve UE context failure message including an encapsulated release message (e.g., an RRC release message), and the first cell may send the release message to the UE 100 as the Msg 4.

In step S915, the UE 100 receives the reference multicast-MCCH scheduling information from the first cell via the release message (e.g., the RRC release message) corresponding to the resume request, wherein the release message carries the reference multicast-MCCH scheduling information.

With the reference multicast-MCCH scheduling information, the UE 100 can accordingly perform step S813, and the details thereof may be referred to the descriptions associated with FIG. 8A, which would not be repeated herein. In one embodiment, the UE 100 may not perform contention resolution.

In an embodiment, in response to determining that the stored multicast-MCCH scheduling information is invalid, the UE 100 transmits a second reserved RA preamble (e.g., Msg 1) to the first cell, wherein the second reserved RA preamble informs the first cell that the UE 100 intends to indicate an interested multicast-MCCH scheduling information among at least one of candidate multicast-MCCH scheduling information. Next, the UE 100 receives an RAR (e.g., Msg 2) corresponding to the second reserved random access preamble from the first cell.

Afterwards, the UE 100 transmits a resume request (e.g., Msg 3) to the first cell in response to the RAR, wherein the resume request indicates the interested multicast-MCCH scheduling information.

Subsequently, the UE 100 receives the interested multicast-MCCH scheduling information from the first cell via at least one of a resume message and a release message corresponding to the resume request.

In detail, in the current communication standard, only one multicast-MCCH scheduling information is available. However, if there are multiple available multicast-MCCH scheduling information (e.g., the candidate multicast-MCCH scheduling information), the UE 100 may be allowed to use the second reserved RA preamble as Msg 1 to inform the first cell that the UE 100 intends to indicate the interested multicast-MCCH scheduling information among the candidate multicast-MCCH scheduling information, and use the Msg 3 to indicate the interested multicast-MCCH scheduling information. In response to the Msg 3, the first cell may use Msg 4 (e.g., the resume message or the release message) to provide the interested multicast-MCCH scheduling information to the UE 100.

Since the interested multicast-MCCH scheduling information is indicated in Msg 3, the first cell cannot use the Msg 2 to provide the interested multicast-MCCH scheduling information, but can only use Msg 4 to provide the interested multicast-MCCH scheduling information.

With the interested multicast-MCCH scheduling information, the UE 100 can apply the interested multicast-MCCH scheduling information (e.g., update the multicast-MCCH scheduling information based on the interested multicast-MCCH scheduling information) and accordingly receiving the multicast MBS configuration while staying in the unconnected state.

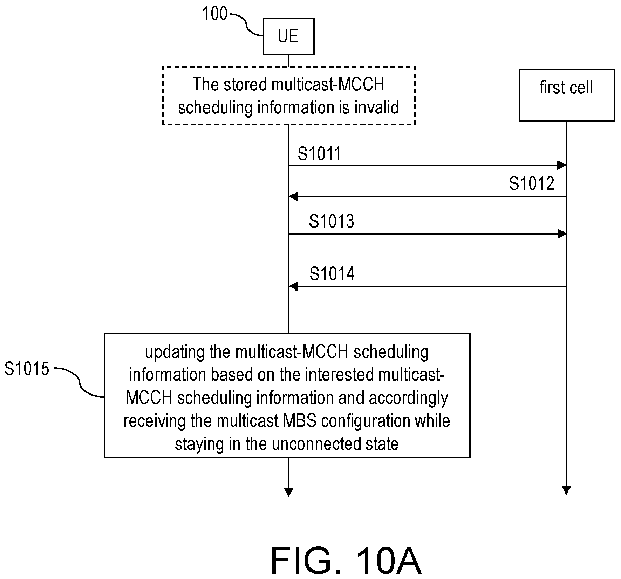

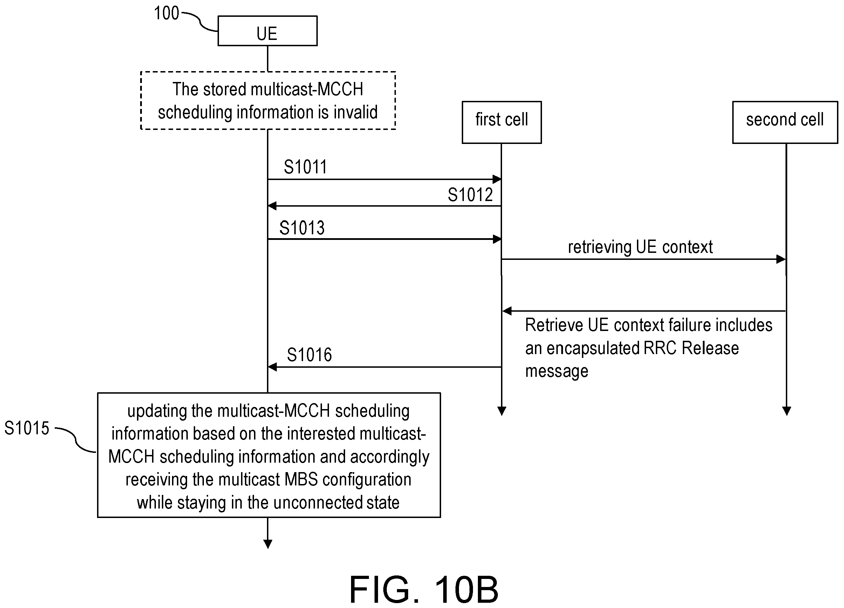

In an embodiment, the embodiments of using the resume message and the release message to carry the interested multicast-MCCH scheduling information would be respectively discussed with FIG. 10A and FIG. 10B.

See FIG. 10A, which shows the enhanced RA procedure according to an embodiment of the disclosure. In FIG. 10A, in response to determining that the stored multicast-MCCH scheduling information is invalid, the UE 100 transmits the second reserved RA preamble (e.g., Msg 1) to the first cell to inform the first cell that the UE 100 intends to indicate an interested multicast-MCCH scheduling information in step S1011. Next, the UE 100 receives an RAR (e.g., Msg 2) corresponding to the RA preamble from the first cell in step S1012.

In step S1013, the UE 100 transmits a resume request (e.g., Msg 3) to the first cell in response to the RAR, wherein the resume request indicates the interested multicast-MCCH scheduling information.

In step S1014, the UE 100 receives the interested multicast-MCCH scheduling information from the first cell via the resume message (e.g., the RRC resume message) corresponding to the resume request, wherein the resume message carries the interested multicast-MCCH scheduling information.

With the interested multicast-MCCH scheduling information, the UE 100 can accordingly perform step S1015 to apply the interested multicast-MCCH scheduling information (e.g., update the multicast-MCCH scheduling information based on the interested multicast-MCCH scheduling information) and accordingly receive the multicast MBS configuration while staying in the unconnected state. In one embodiment, the UE 100 may not perform contention resolution.

See FIG. 10B, which shows the enhanced RA procedure according to an embodiment of the disclosure. In FIG. 10B, in response to determining that the stored multicast-MCCH scheduling information is invalid, the UE 100 transmits the second reserved RA preamble (e.g., Msg 1) to the first cell to inform the first cell that the UE 100 intends to indicate an interested multicast-MCCH scheduling information in step S1011. Next, the UE 100 receives an RAR (e.g., Msg 2) corresponding to the RA preamble from the first cell in step S1012.

In step S1013, the UE 100 transmits a resume request (e.g., Msg 3) to the first cell in response to the RAR, wherein the resume request indicates the interested multicast-MCCH scheduling information.

In the present embodiment, in response to the Msg 3, the first cell may send a request to the second cell (e.g., the last serving cell of the UE 100) for retrieving the UE context associated with the UE 100. In FIG. 10B, the second cell may send the retrieve UE context failure message including an encapsulated release message (e.g., an RRC release message), and the first cell may send the release message to the UE 100 as the Msg 4.

In step S1016, the UE 100 receives the interested multicast-MCCH scheduling information from the first cell via the release message (e.g., the RRC release message) corresponding to the resume request, wherein the release message carries the interested multicast-MCCH scheduling information.

With the interested multicast-MCCH scheduling information, the UE 100 can accordingly perform step S1015 to apply the interested multicast-MCCH scheduling information (e.g., update the multicast-MCCH scheduling information based on the interested multicast-MCCH scheduling information) and accordingly receive the multicast MBS configuration while staying in the unconnected state. In one embodiment, the UE 100 may not perform contention resolution.

In an embodiment, in the procedure of performing step S210, the processor 104 can receive, from the second cell, the multicast MBS configuration via the dedicated message in the connected state, wherein the second cell serves the UE 100 in the connected state.

That is, the UE 100 can directly obtain the multicast MBS configuration via the dedicated message from the second cell, wherein the dedicated message is used to carry the multicast-MCCH scheduling information in the above embodiments.

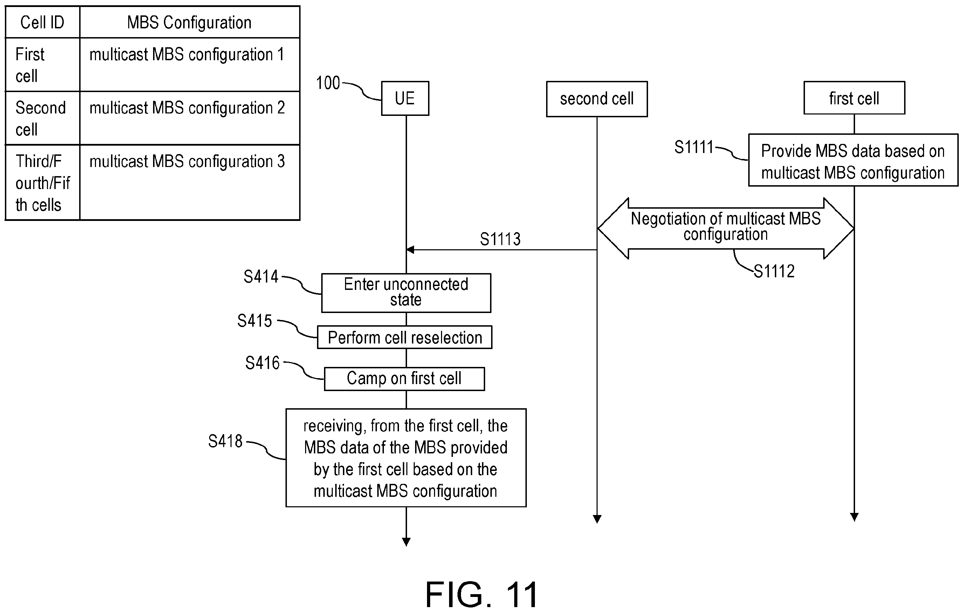

See FIG. 11, which shows an application scenario according to the embodiment of the disclosure. In FIG. 11, the first cell can provide the MBS data based on the multicast MBS configuration in step S1 111. In step S1112, the first cell and the second cell may perform the negotiation of the multicast MBS configuration.

In FIG. 11, when the UE 100 is in the connected state, the processor 104 may receive, from the second cell, the multicast MBS configuration via the dedicated message in step S1113. In one embodiment, the dedicated message may be an RRC release message.

In other embodiments, the dedicated message may be other kind of signals, such as an RRC reconfiguration message. In this case, the processor 104 may firstly receive the dedicated message including the multicast MBS configuration from the second cell, and then receive the RRC release message, but the disclosure is not limited thereto.

In one embodiment, the second cell can further include the multicast MBS configuration for neighbor cells of the second cell in the dedicated message, wherein the neighbor cells of the second cell may be the subset of RNA.

In FIG. 11, assuming that the first cell and the third/fourth/fifth cells are the neighbor cells of the second cell (e.g., these cells belong to the same RNA), the dedicated message from the second cell to the UE 100 can not only include the multicast MBS configuration for the second cell (e.g., the multicast MBS configuration 2 in FIG. 11), but can also include the multicast MBS configuration for the first cell (e.g., the multicast MBS configuration 1 in FIG. 11) and the multicast MBS configuration for the third/fourth/fifth cells (e.g., the multicast MBS configuration 3 in FIG. 11), but the disclosure is not limited thereto.

Afterwards, the UE 100 can perform steps S414 to S416 and S418, and the details thereof can be referred to the descriptions of FIG. 4, which would not be repeated herein. In the embodiment, the multicast MBS configuration may include the contents as shown in Table 2, but the disclosure is not limited thereto.

Accordingly, the UE 100 can continue to receive the MBS data after camping on the first cell and does not need to switch to the connected state for acquiring information such as the multicast-MCCH scheduling information, which is more power efficient to the UE 100.

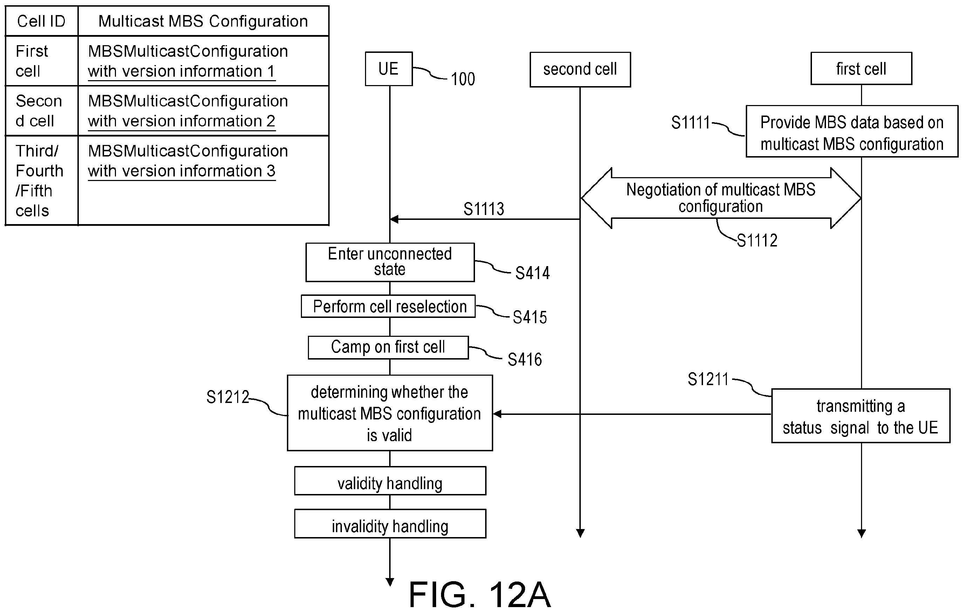

See FIG. 12A, which shows an application scenario according to an embodiment of the disclosure. In the embodiment, the UE 100, the first/second cell can perform the corresponding steps S1 111 to S1113 and steps S414 to S416, and the associated details can be referred to the descriptions associated with FIG. 4 and FIG. 11, which would not be repeated herein.

In the embodiment, the UE 100 may additionally check the validity of the multicast MBS configuration associated with the first cell before receiving, from the first cell, the MBS data of the MBS provided by the first cell based on the multicast MBS configuration.

In various embodiments, the UE 100 can perform corresponding operations according to the determination result of the validity of the multicast MBS configuration.

Specifically, in FIG. 12A, the first cell may transmit a status signal to the UE 100 in step S1211, wherein the status signal may include a reference multicast MBS configuration associated with the MBS, and the status signal can be received by the UE 100. In one embodiment, the first cell may transmit the status signal by using broadcasting and/or unicasting, but the disclosure is not limited thereto.

In one embodiment, the status of the multicast MBS configuration may be the version information of the multicast MBS configuration and/or the cell identification of the first cell.

In some embodiments, each cell can transmit (e.g., broadcast) the status of the corresponding multicast MBS configuration. Taking FIG. 12A as an example, the status of the multicast MBS configuration from the first cell may include the multicast MBS configuration with version information 1. The status of the multicast MBS configuration from the second cell may include the multicast MBS configuration with version information 2, and the status of the multicast MBS configuration from the third/fourth/fifth cells may include the multicast MBS configuration with version information 3, but the disclosure is not limited thereto.

In step S1212, the UE 100 may determine whether the multicast MBS configuration is valid. If the multicast MBS configuration is valid, the UE 100 may subsequently perform validity handling. On the other hand, if the multicast MBS configuration is invalid, the UE 100 may subsequently perform invalidity handling.

In one embodiment, in response to determining that the status of the multicast MB S configuration (which may be the multicast MBS configuration received in step S1113) is consistent with the status of the reference multicast MBS configuration, the UE 100 determines that the multicast MBS configuration is valid. On the other hand, in response to determining that the status of the multicast MBS configuration is not consistent with the status of the reference multicast MBS configuration, the UE 100 determines that the multicast MBS configuration is invalid, but the disclosure is not limited thereto.

In one embodiment, if the stored version information does not match the broadcasted status of the multicast MBS configuration from the first cell, the UE 100 may consider the stored multicast MBS configuration (e.g., the multicast MBS configuration received in step S1113) is invalid. On the other hand, if the stored version information matches the broadcasted status of the multicast MBS configuration from the first cell, the UE 100 may consider the stored multicast MBS configuration is valid.

In another embodiment, if the cell ID list of the multicast MBS configuration does not include the cell ID of the first cell, the UE 100 will also consider the stored multicast MBS configuration is invalid. On the other hand, if the cell ID list of the multicast MBS configuration includes the cell ID of the first cell, the UE 100 will consider the stored multicast MBS configuration is valid, but the disclosure is not limited thereto.

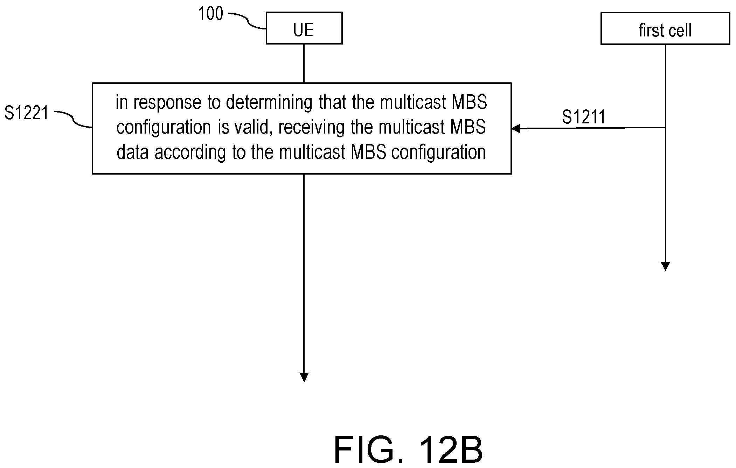

See FIG. 12B, which shows an application scenario according to an embodiment of the disclosure. In FIG. 12B, after the UE 100 receives the (broadcasted) status signal of the multicast MBS configuration in step S1211, the UE 100 may determine whether the multicast MBS configuration is valid.

In step S1221, in response to determining that the multicast MBS configuration is valid, the UE 100 receives the multicast MBS data according to the multicast MBS configuration.

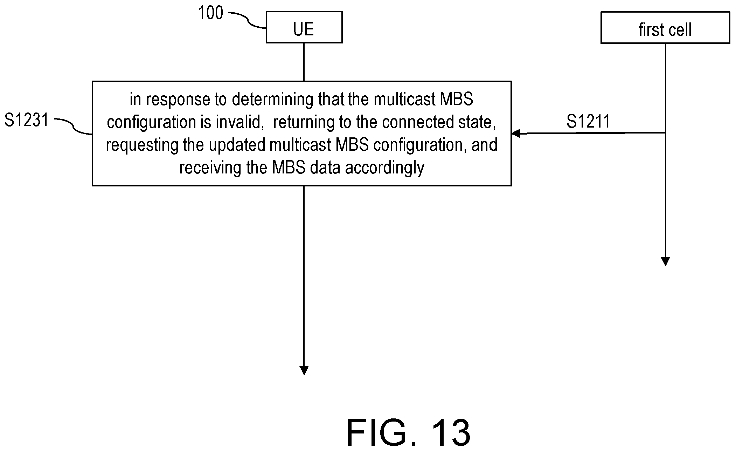

See FIG. 13, which shows an application scenario according to an embodiment of the disclosure. In FIG. 13, after the UE 100 receives the (broadcasted) status signal of the multicast MBS configuration in step S1211, the UE 100 may determine whether the multicast MBS configuration is valid.

In step S1231, in response to determining that the multicast MBS configuration is invalid, the UE 100 may return to the connected state, request the new/updated multicast MBS configuration, and receive the MBS data accordingly. That is, the UE 100 may return to the RRC connected state with the first cell and request the first cell to provide the updated multicast MBS configuration. With the updated multicast MBS configuration, the UE 100 can accordingly receive the MBS data from the first cell, but the disclosure is not limited thereto.

In an embodiment, in response to determining that the multicast MBS configuration is invalid, the UE 100 updates the multicast MBS configuration via an enhanced RA procedure and accordingly receives the MBS data.

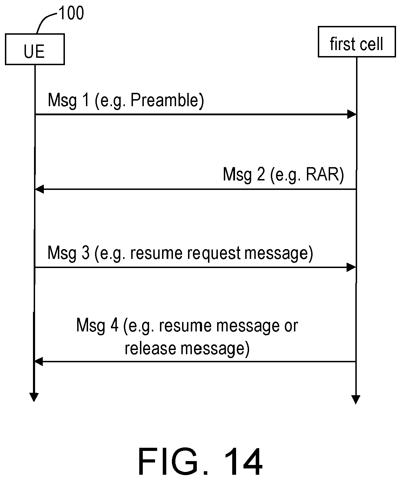

See FIG. 14, which shows the enhanced RA procedure according to embodiments of the disclosure. In the enhanced RA procedure of FIG. 14, the UE 100 may initiate the enhanced RA procedure by sending a Msg 1 (e.g., an RA preamble) to the first cell, and the UE 100 may receive, from the first cell, a Msg 2 (e.g., an RA response (RAR)) corresponding to the Msg 1.

Next, the UE 100 may transmit a Msg 3 (e.g., a resume request) to the first cell, and the UE 100 may receive, from the first cell, a Msg 4 (e.g., a resume message or a release message) corresponding to the Msg 3.

In an embodiment, in response to determining that the stored multicast MBS configuration is invalid, the UE 100 requests the first cell to provide the new/reference multicast MBS configuration by using a reserved RA resource. The reserved RA resource may be exclusively used to request the reference multicast MBS configuration. In some embodiments, the reserved RA resource includes at least one of a first reserved random access preamble and a reserved random access occasion, but the disclosure is not limited thereto.

Next, the UE 100 may receive the reference multicast MBS configuration from the first cell via at least one of the RA response (e.g., Msg 2), the resume message, and the release message corresponding to the reserved RA resource. That is, when the first cell receives Msg 1 via the reserved RA resource, the first cell may use at least one of the RA response (e.g., Msg 2), the resume message, and the release message to provide the new/reference multicast MBS configuration to the UE 100. Afterwards, the UE 100 applies the reference multicast MBS configuration (e.g., updates the multicast MBS configuration based on the reference multicast MBS configuration) while staying in the unconnected state. That is, the UE 100 would not switch to the connected state in response to the enhanced RA procedure.

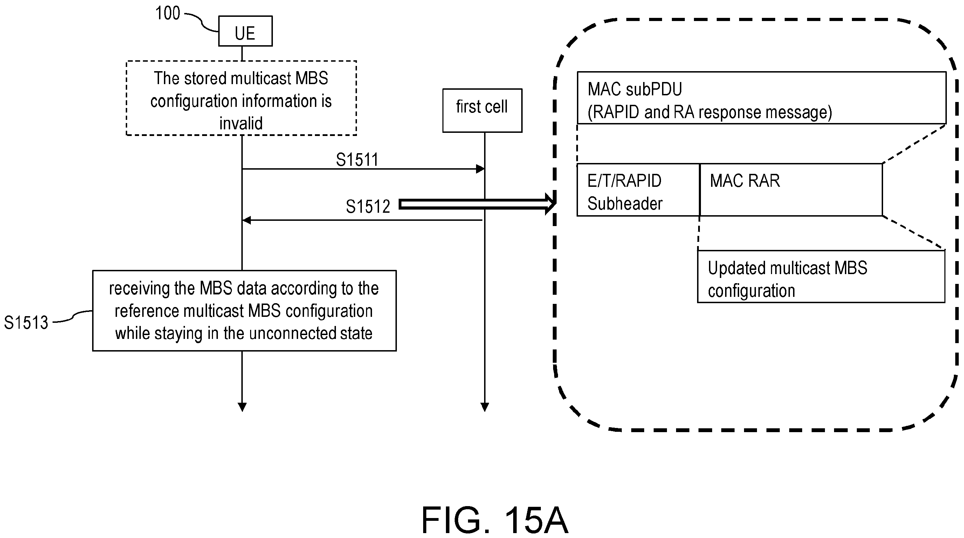

In an embodiment, the embodiments of using the RA response, the resume message, and the release message to carry the reference multicast MBS configuration would be respectively discussed with FIG. 15A to FIG. 15C.

See FIG. 15A, which shows the enhanced RA procedure according to an embodiment of the disclosure. In FIG. 15A, in response to determining that the stored multicast MBS configuration is invalid, the UE 100 may request the first cell to provide the new/reference multicast MBS configuration by using the reserved RA resource in step S1511. In the present embodiment, the reserved RA resource may be the first reserved RA preamble, which may be exclusively used for requesting the reference multicast MBS configuration. That is, the UE 100 may send the first reserved RA preamble to the first cell to request the reference multicast MBS configuration.

In the present embodiment, the reserved RA resource may be the reserved RA occasion, and the UE 100 may send Msg 1 at the reserved RA occasion, which may be exclusively used for requesting the new/reference multicast MBS configuration, but the disclosure is not limited thereto.

In step S1512, the UE 100 receives the RAR from the first cell, wherein the RAR in the present embodiment may carry the reference multicast MBS configuration (which can be regarded as the updated multicast MBS configuration), and the structure of the RAR can be referred to the right part of FIG. 15A.

In step S1513, the UE 100 receives the MBS data according to the reference multicast MBS configuration while staying in the unconnected state.

. In one embodiment, the UE 100 may not perform contention resolution.

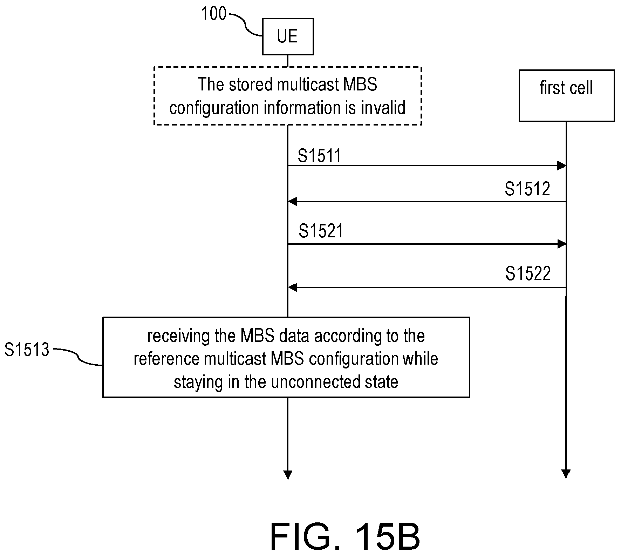

See FIG. 15B, which shows the enhanced RA procedure according to an embodiment of the disclosure. In FIG. 15B, in response to determining that the stored multicast MBS configuration is invalid, the UE 100 may request the first cell to provide the new/reference multicast MBS configuration by using the reserved RA resource in step S1511, and the details thereof may be referred to the descriptions associated with FIG. 15A, which would not be repeated herein.

In step S1512, the UE 100 receives the RAR from the first cell. In step S1521, the UE 100 transmits the Msg 3 to the first cell.

In step S1522, the UE 100 receives the Msg 4 corresponding to the Msg 3 from the first cell, wherein the Msg 4 in the present embodiment may be the resume message (e.g., an RRC resume message), and the resume message may carry the reference multicast MBS configuration (which can be regarded as the updated multicast MBS configuration).

With the reference multicast MBS configuration, the UE 100 can accordingly perform step S1513, and the details thereof may be referred to the descriptions associated with FIG. 15A, which would not be repeated herein. In one embodiment, the UE 100 may not perform contention resolution.

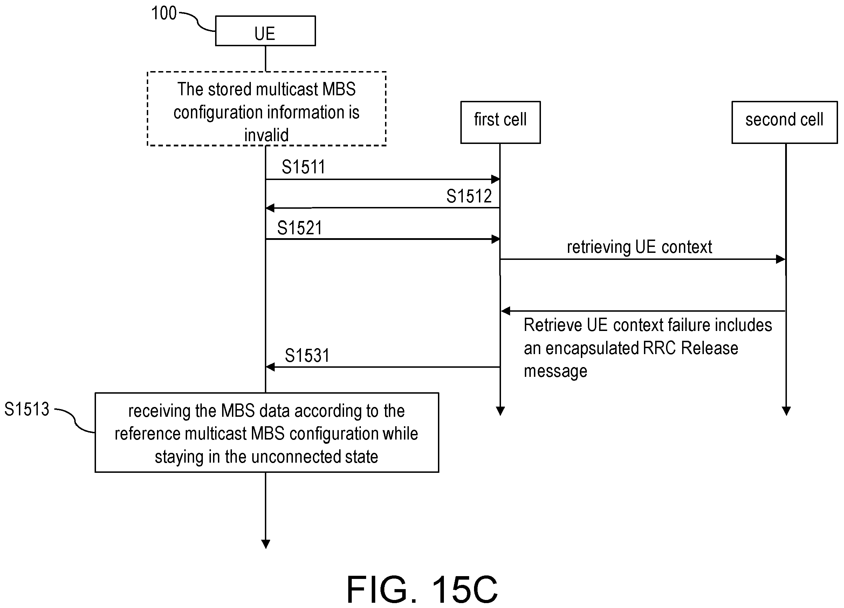

See FIG. 15C, which shows the enhanced RA procedure according to an embodiment of the disclosure. In FIG. 15C, in response to determining that the stored multicast MBS configuration is invalid, the UE 100 may request the first cell to provide the new/reference multicast MBS configuration by using the reserved RA resource in step S1511, and the details thereof may be referred to the descriptions associated with FIG. 15A, which would not be repeated herein.

In step S1512, the UE 100 receives the RAR from the first cell. In step S1521, the UE 100 transmits the Msg 3 to the first cell.

In the present embodiment, in response to the Msg 3, the first cell may send a request to the second cell (e.g., the last serving cell of the UE 100) for retrieving the UE context associated with the UE 100. In FIG. 15C, the second cell may send the retrieve UE context failure message including an encapsulated release message (e.g., an RRC release message), and the first cell may send the release message to the UE 100 as the Msg 4.

In step S1531, the UE 100 receives the Msg 4 corresponding to the Msg 3 from the first cell, wherein the Msg 4 in the present embodiment may be the release message (e.g., the RRC release message), and the release message may carry the reference multicast MBS configuration (which can be regarded as the updated multicast MBS configuration).

With the reference multicast MBS configuration, the UE 100 can accordingly perform step S1513, and the details thereof may be referred to the descriptions associated with FIG. 15A, which would not be repeated herein. In one embodiment, the UE 100 may not perform contention resolution.

In an embodiment, in response to determining that the stored multicast MBS configuration is invalid, the UE 100 transmits an RA preamble (e.g., Msg 1) to the first cell and receives an RAR (e.g., Msg 2) corresponding to the RA preamble from the first cell, wherein the RA preamble and the corresponding RAR may be regular RA preamble and regular RAR in the present embodiment.

Next, the UE 100 transmits a resume request (e.g., Msg 3) to the first cell, wherein the resume request requests the first cell to provide the new/reference multicast MBS configuration.

That is, the UE 100 requests the first cell to provide the reference multicast MBS configuration by using Msg 3 in the present embodiment, rather than using Msg 1.

Afterwards, the UE 100 receives the reference multicast MBS configuration from the first cell via at least one of the resume message and the release message corresponding to the resume request. That is, since the UE 100 uses Msg 3 to request the new/reference multicast MBS configuration, the first cell cannot use Msg 2 to provide the reference multicast MBS configuration, but can only use Msg 4 to provide the reference multicast MBS configuration.

With the reference multicast MBS configuration, the UE 100 can apply the reference multicast MBS configuration (e.g., update the multicast MBS configuration based on the reference multicast MBS configuration) while staying in the unconnected state.

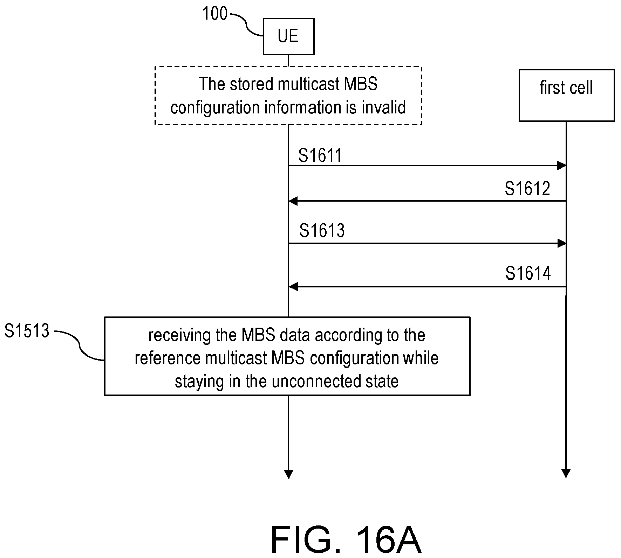

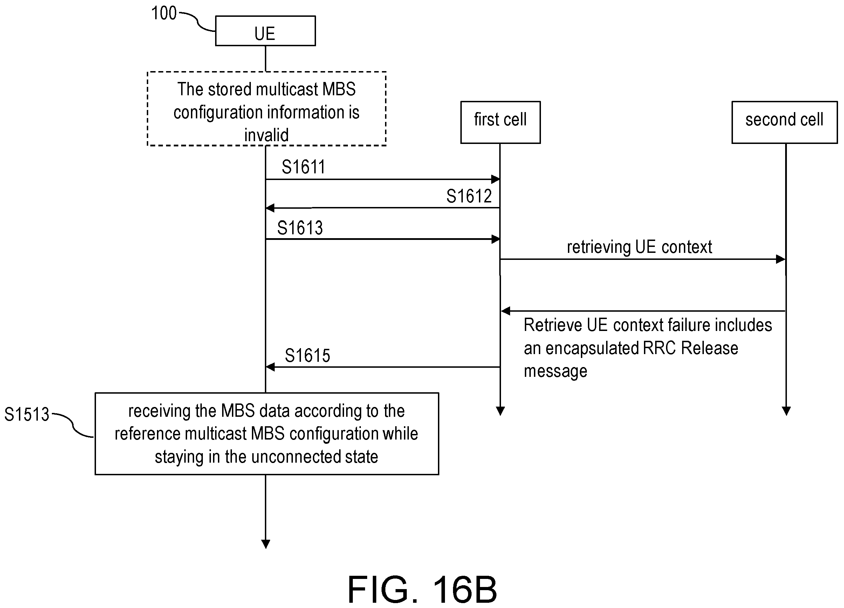

In an embodiment, the embodiments of using the resume message and the release message to carry the reference multicast MBS configuration would be respectively discussed with FIG. 16A and FIG. 16B.

See FIG. 16A, which shows the enhanced RA procedure according to an embodiment of the disclosure. In FIG. 16A, in response to determining that the stored multicast MBS configuration is invalid, the UE 100 transmits an RA preamble (e.g., Msg 1) to the first cell in step S1611 and receives an RAR (e.g., Msg 2) corresponding to the RA preamble from the first cell in step S1612.

In step S1613, the UE 100 transmits a resume request (e.g., Msg 3) to the first cell, wherein the resume request requests the first cell to provide the new/reference multicast MBS configuration.

In step S1614, the UE 100 receives the reference multicast MBS configuration from the first cell via the resume message (e.g., the RRC resume message) corresponding to the resume request, wherein the resume message carries the reference multicast MBS configuration.

With the reference multicast MBS configuration, the UE 100 can accordingly perform step S1513, and the details thereof may be referred to the descriptions associated with FIG. 15A, which would not be repeated herein. In one embodiment, the UE 100 may not perform contention resolution.

See FIG. 16B, which shows the enhanced RA procedure according to an embodiment of the disclosure. In FIG. 16B, in response to determining that the stored multicast MBS configuration is invalid, the UE 100 transmits an RA preamble (e.g., Msg 1) to the first cell in step S1611 and receives an RAR (e.g., Msg 2) corresponding to the RA preamble from the first cell in step S1612.

In step S1613, the UE 100 transmits the resume request (e.g., Msg 3) to the first cell, wherein the resume request requests the first cell to provide the new/reference multicast MBS configuration.

In the present embodiment, in response to the Msg 3, the first cell may send a request to the second cell (e.g., the last serving cell of the UE 100) for retrieving the UE context associated with the UE 100. In FIG. 16B, the second cell may send the retrieve UE context failure message including an encapsulated release message (e.g., an RRC release message), and the first cell may send the release message to the UE 100 as the Msg 4.

In step S1615, the UE 100 receives the reference multicast MBS configuration from the first cell via the release message (e.g., the RRC release message) corresponding to the resume request, wherein the release message carries the reference multicast MBS configuration.

With the reference multicast MBS configuration, the UE 100 can accordingly perform step S1513, and the details thereof may be referred to the descriptions associated with FIG. 15A, which would not be repeated herein. In one embodiment, the UE 100 may not perform contention resolution.

In an embodiment, in response to determining that the stored multicast MBS configuration is invalid, the UE 100 transmits a second reserved RA preamble (e.g., Msg 1) to the first cell, wherein the second reserved RA preamble informs the first cell that the UE 100 intends to indicate an interested multicast MBS configuration among at least one of candidate multicast MBS configuration. Next, the UE 100 receives an RAR (e.g., Msg 2) corresponding to the second reserved random access preamble from the first cell.

Afterwards, the UE 100 transmits a resume request (e.g., Msg 3) to the first cell in response to the RAR, wherein the resume request indicates the interested multicast MBS configuration.

Subsequently, the UE 100 receives the interested multicast MBS configuration from the first cell via at least one of a resume message and a release message corresponding to the resume request.

In detail, in the current communication standard, only one multicast MBS configuration is available. However, if there are multiple available multicast MBS configuration (e.g., the candidate multicast MBS configuration), the UE 100 may be allowed to use the second reserved RA preamble as Msg 1 to inform the first cell that the UE 100 intends to indicate the interested multicast MBS configuration among the candidate multicast MBS configuration, and use the Msg 3 to indicate the interested multicast MBS configuration. In response to the Msg 3, the first cell may use Msg 4 (e.g., the resume message or the release message) to provide the interested multicast MBS configuration to the UE 100.

Since the interested multicast MBS configuration is indicated in Msg 3, the first cell cannot use the Msg 2 to provide the interested multicast MBS configuration, but can only use Msg 4 to provide the interested multicast MBS configuration.

With the interested multicast MBS configuration, the UE 100 can apply the interested multicast MBS configuration (e.g., update the multicast MBS configuration based on the interested multicast MBS configuration) and accordingly receiving the MBS data while staying in the unconnected state.

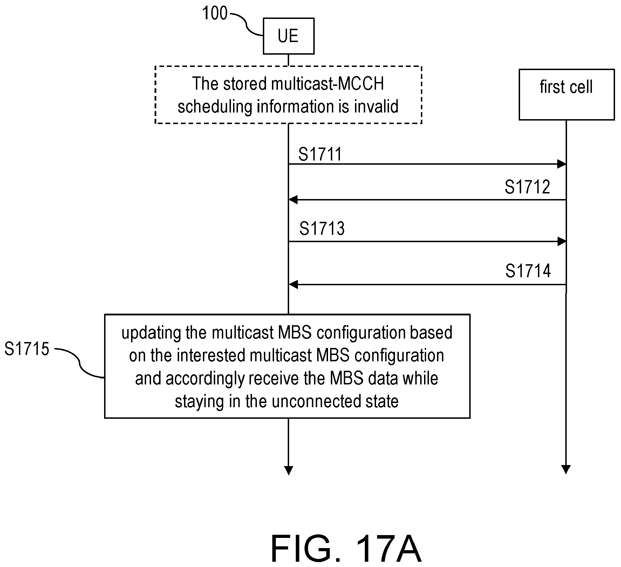

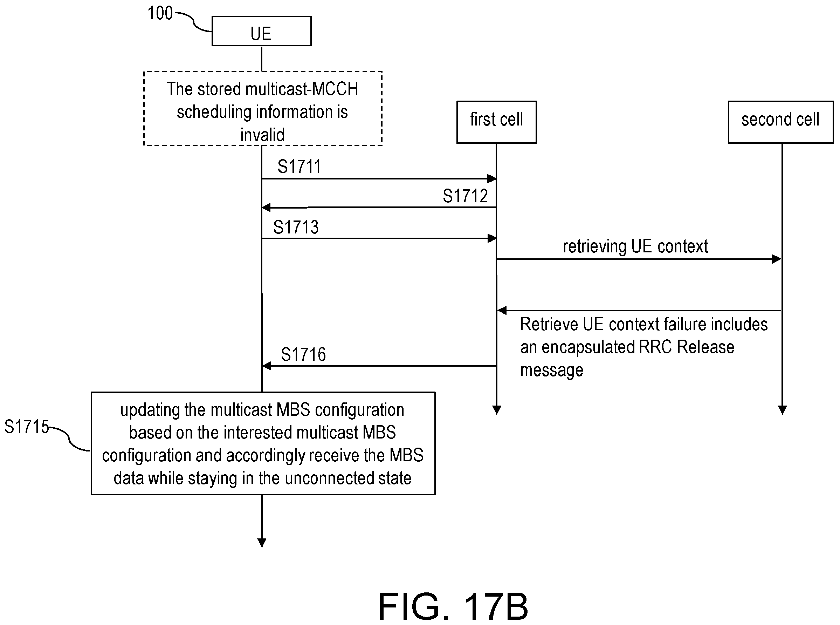

In the disclosure, the embodiments of using the resume message and the release message to carry the interested multicast MBS configuration would be respectively discussed with FIG. 17A and FIG. 17B.

See FIG. 17A, which shows the enhanced RA procedure according to an embodiment of the disclosure. In FIG. 17A, in response to determining that the stored multicast MBS configuration is invalid, the UE 100 transmits the second reserved RA preamble (e.g., Msg 1) to the first cell to inform the first cell that the UE 100 intends to indicate an interested multicast MBS configuration in step S1711. Next, the UE 100 receives an RAR (e.g., Msg 2) corresponding to the RA preamble from the first cell in step S1712.

In step S1713, the UE 100 transmits a resume request (e.g., Msg 3) to the first cell in response to the RAR, wherein the resume request indicates the interested multicast MBS configuration.

In step S1714, the UE 100 receives the interested multicast MBS configuration from the first cell via the resume message (e.g., the RRC resume message) corresponding to the resume request, wherein the resume message carries the interested multicast MBS configuration.

With the interested multicast MBS configuration, the UE 100 can accordingly perform step S1715 to apply the interested multicast MBS configuration (e.g., update the multicast MBS configuration based on the interested multicast MBS configuration) and accordingly receive the MBS data while staying in the unconnected state. In one embodiment, the UE 100 may not perform contention resolution.

See FIG. 17B, which shows the enhanced RA procedure according to an embodiment of the disclosure. In FIG. 17B, in response to determining that the stored multicast MBS configuration is invalid, the UE 100 transmits the second reserved RA preamble (e.g., Msg 1) to the first cell to inform the first cell that the UE 100 intends to indicate an interested multicast MBS configuration in step S1711. Next, the UE 100 receives an RAR (e.g., Msg 2) corresponding to the RA preamble from the first cell in step S1712.

In step S1713, the UE 100 transmits a resume request (e.g., Msg 3) to the first cell in response to the RAR, wherein the resume request indicates the interested multicast MBS configuration.

In the present embodiment, in response to the Msg 3, the first cell may send a request to the second cell (e.g., the last serving cell of the UE 100) for retrieving the UE context associated with the UE 100. In FIG. 17B, the second cell may send the retrieve UE context failure message including an encapsulated release message (e.g., an RRC release message), and the first cell may send the release message to the UE 100 as the Msg 4.

In step S1716, the UE 100 receives the interested multicast MBS configuration from the first cell via the release message (e.g., the RRC release message) corresponding to the resume request, wherein the release message carries the interested multicast MBS configuration.

With the interested multicast MBS configuration, the UE 100 can accordingly perform step S1715 to apply the interested multicast MBS configuration (e.g., update the multicast MBS configuration based on the interested multicast MBS configuration) and accordingly receive the MBS data while staying in the unconnected state. In one embodiment, the UE 100 may not perform contention resolution.

In an embodiment of the disclosure, the first cell may update the multicast MBS configuration for the camped UE (e.g., the UE 100).

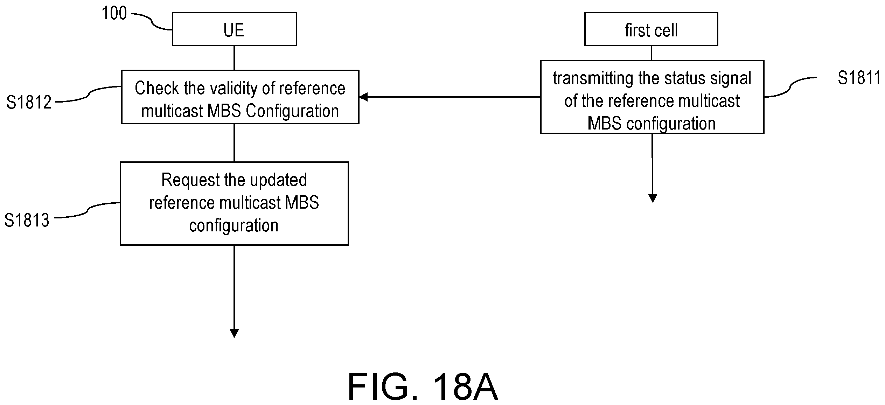

See FIG. 18A, which shows the procedure for updating the multicast MBS configuration according to an embodiment of the disclosure.

In FIG. 18A, the first cell may transmit the status signal of the reference multicast MBS configuration in step S1811, wherein the status signal may include the version information and/or the cell ID as discussed in the above. In the embodiment, the first cell may broadcast a change notification associated with the reference multicast MBS configuration as the status signal.

In the embodiment, any multicast MBS configuration changing will cause the first cell to update the status of the multicast MBS configuration.

In step S1812, the UE 100 may check the validity of the reference multicast MBS configuration according to the status signal. In step S1813, the UE 100 may request the updated reference multicast MBS configuration as described in the above embodiments.

In the embodiment, any multicast MBS configuration changing will cause the UE 100 to request the multicast MBS configuration. However, the updated multicast MBS configuration may not be the interested multicast MBS configuration of the UE 100. That is, the UE 100 may unnecessarily perform S1813.

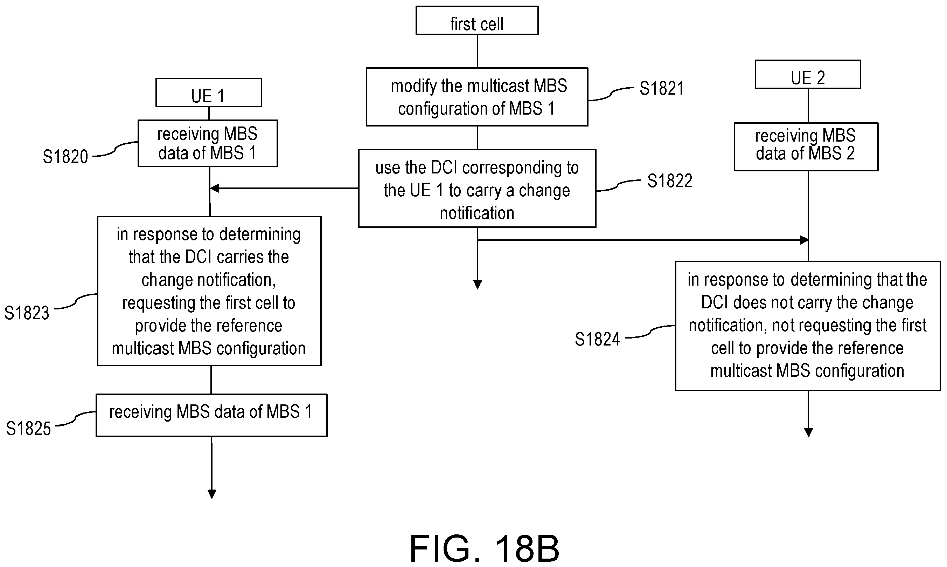

See FIG. 18B, which shows the procedure for updating the multicast MBS configuration according to an embodiment of the disclosure. In FIG. 18B, it is assumed that the first cell is serving UE 1 and UE 2, wherein the UE 1 is receiving the MBS data of MBS 1 provided by the first cell in step S1820, and the UE 2 is receiving the MBS data of MBS 2 provided by the first cell.

In addition, it is assumed that the first cell (only) modifies the multicast MBS configuration of MBS 1 in step S1821. In this case, the first cell may (only) notifies the UE 1 to update the corresponding multicast MBS configuration with the following operations.

In the embodiments of the disclosure, the UE 1 may receive the MBS data of the MBS 1 UE based on a downlink control information (DCI). In this case, the first cell may use the DCI corresponding to the UE 1 to carry a change notification in step S1822, wherein the change notification indicates that the new/reference multicast MBS configuration has been updated.

In step S1823, in response to determining that the DCI corresponding to the UE 1 carries the change notification, the UE 1 may request the first cell to provide the (updated) new/reference multicast MBS configuration in step S1823. With the (updated) reference multicast MBS configuration, the UE 1 may accordingly receive the MBS data of MBS 1 in step S1825.

More specifically, if (only) the reference multicast MBS configuration of MBS 1 (which uses a group Radio Network Temporary Identifier (G-RNTI) 1) is changed, the first cell may use the bits in the DCI of G-RNTI 1 as the change notification to trigger the UE 1 to request the (updated) reference multicast MBS configuration of MBS 1.

On the other hand, since the reference multicast MBS configuration of MBS 2 (which may use G-RNTI 2) is not changed in FIG. 18B, the UE 2 would not determine the DCI corresponding to the UE 2 carries any change notification. In this case, in response to determining that the DCI does not carry the change notification, the UE 2 may not request the first cell to provide the new/reference multicast MBS configuration of MBS 2, but the disclosure is not limited thereto.

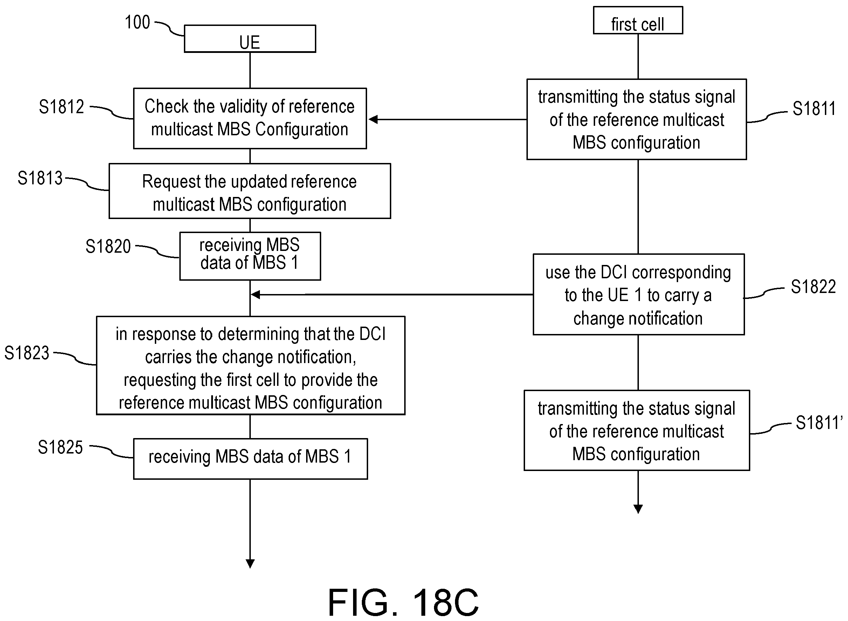

See FIG. 18C, which shows the procedure for updating the multicast MBS configuration according to an embodiment of the disclosure. In the disclosure, the embodiment of FIG. 18C can be regarded as the combination of the embodiments in FIG. 18A and FIG. 18B.

In FIG. 18C, the first cell transmits the status signal of the reference multicast MBS configuration in step S1811. The UE 100 checks the validity of reference multicast MBS Configuration in step S1812. In step S1813, the UE 100 requests the updated reference multicast MBS configuration, and the UE 100 accordingly receives the MBS data of MBS 1 in step S1820.

In step S1822, the first cell uses the DCI corresponding to the UE 1 to carry a change notification. In S1823, in response to determining that the DCI carries the change notification, the UE 100 requests the first cell to provide the new/reference multicast MBS configuration, and accordingly receives the MBS data of MBS 1 in step S1825.

In step S1811', the first cell may transmit the (updated) status signal of the reference multicast MBS configuration.

In the embodiment, after step S1825, the UE 100 may determine whether the DCI is lost. If not, the UE 100 may ignore the status signal sent in step S1811', and hence the UE 100 would not unnecessarily perform step S1813 as in FIG. 18A. On the other hand, if the DCI is lost, the UE 100 may acquire the status signal sent in step S181 1'.

In another alternative of the embodiment of FIG. 18C, the change of broadcasted status of the multicast MBS configuration will not trigger the change notification. Therefore, the camped UE will not reacquire the broadcasted status of the multicast MBS configuration unless the camped UE losses the G-RNTI, but the disclosure is not limited thereto.

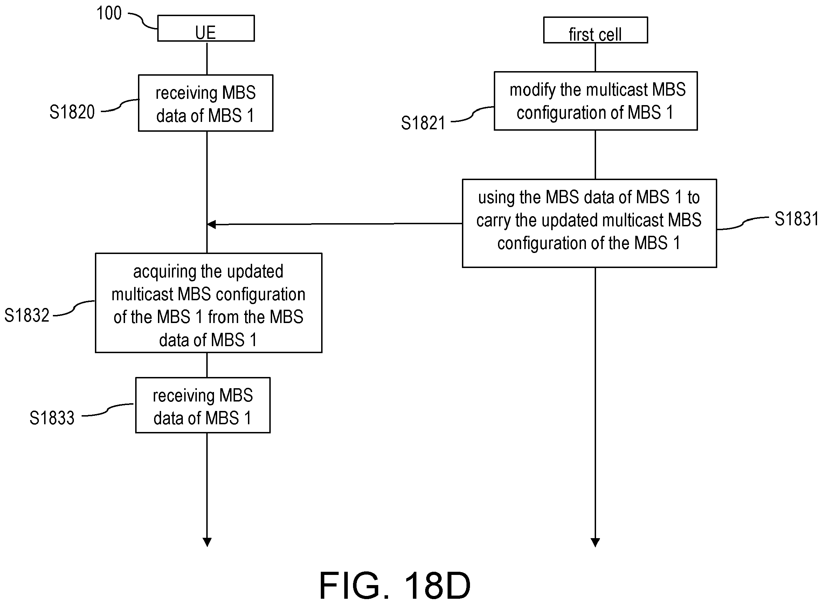

See FIG. 18D, which shows the procedure for updating the multicast MBS configuration according to an embodiment of the disclosure.

In FIG. 18D, the UE 100 receives the MBS data of MBS 1 in step S1820. In step S1821, the first cell (only) modifies the multicast MBS configuration of MBS 1. In the embodiment, the first cell may use the MBS data of MBS 1 to carry the updated multicast MBS configuration of the MBS 1 in step S1831. Accordingly, the UE 100 may acquire the updated multicast MBS configuration of the MBS 1 from the MBS data of MBS 1 in step S1832, and accordingly receive the MBS data 1 of MBS 1 in step S1833.

That is, the first cell may directly use the MBS data to carry the updated multicast MBS configuration of the corresponding MBS.

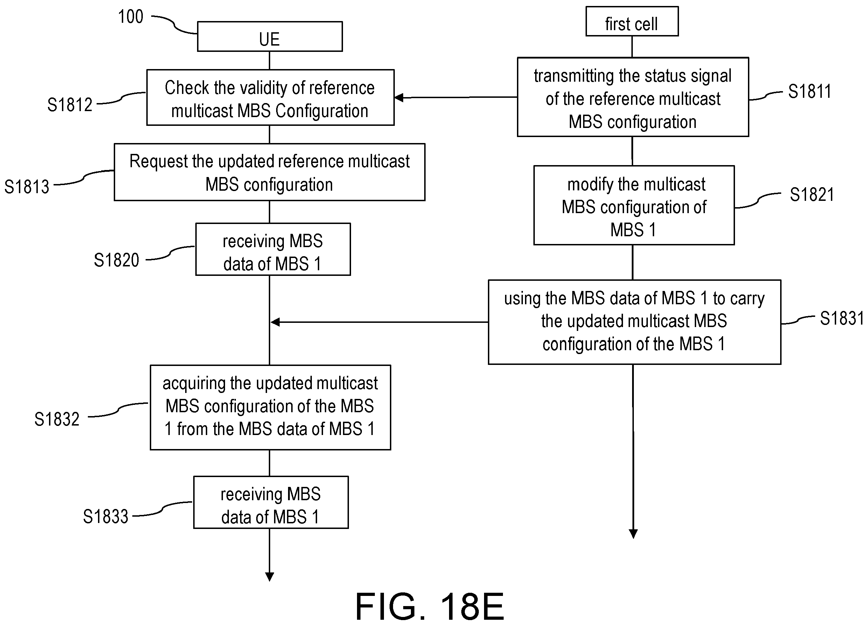

See FIG. 18E, which shows the procedure for updating the multicast MBS configuration according to an embodiment of the disclosure. In the disclosure, the embodiment in FIG. 18E can be regarded as the combination of the embodiments in FIG. 18A and FIG. 18D.

In FIG. 18E, the first cell transmits the status signal of the reference multicast MB S configuration in step S1811. The UE 100 checks the validity of reference multicast MB S Configuration in step S1812. In step S1813, the UE 100 requests the updated reference multicast MBS configuration, and the UE 100 accordingly receives the MBS data of MBS 1 in step S1820.

The first cell may use the MBS data of MBS 1 to carry the updated multicast MBS configuration of the MBS 1 in step S1831. Accordingly, the UE 100 may acquire the updated multicast MBS configuration of the MBS 1 from the MBS data of MBS 1 in step S1832, and accordingly receive the MBS data 1 of MBS 1 in step S1833.In a first alternative of the embodiment of FIG. 18E, the change of broadcasted status of the multicast MBS configuration will not trigger the change notification. Therefore, the camped UE will not reacquire the broadcasted status of the multicast MBS configuration unless the UE losses the G-RNTI.

In a second alternative of the embodiment of FIG. 18E, the communication specification may define that the camped UE will not need to reacquire the broadcasted status of the multicast MBS configuration unless the UE losses the G-RNTI, but the disclosure is not limited thereto.

In an embodiment of the disclosure, the UE 100 may receive a status signal from the first cell, wherein the status signal may include a status of a reference multicast MBS configuration associated with the MBS, wherein the status comprises a version shared by a plurality of reference MBSs. That is, the version may be shared by all or a group of MBSs.

In an alternative of the embodiment, the UE 100 may receive a status signal from the first cell, wherein the status signal may include a status of a reference multicast MBS configuration associated with the MBS, wherein the status comprises a version dedicated to the MBS. That is, the version may be one to one mapping to the MBS, but the disclosure is not limited thereto.

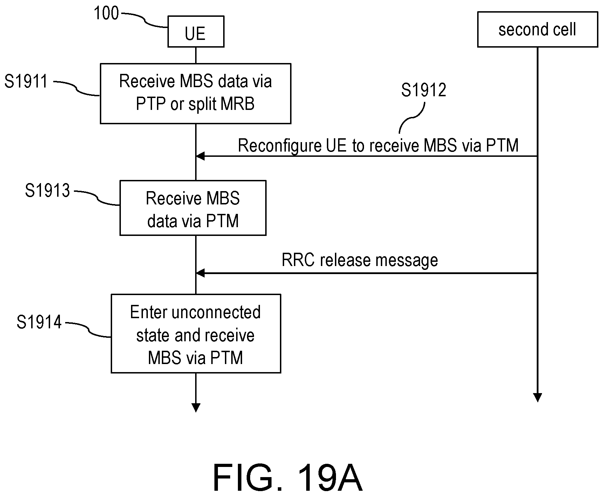

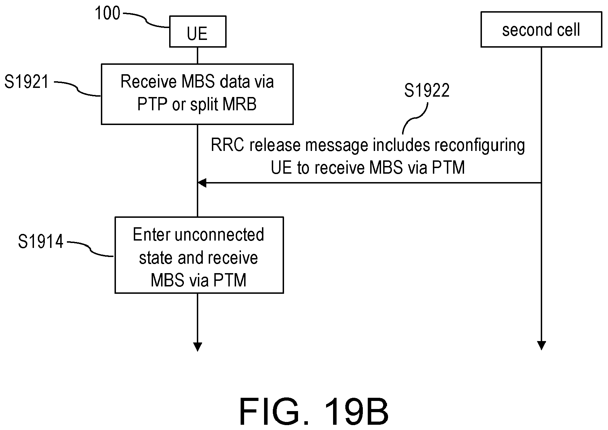

In FIG. 19A and FIG. 19B, the preparation of entering the unconnected state would be discussed.

See FIG. 19A, which shows the preparation of entering the unconnected state according to an embodiment of the disclosure.

In FIG. 19A, the UE 100 may be served by the second cell. In this case, the UE 100 may receive MBS data via point-to-point (PTP) or split MBS Radio Bearer (MRB) in step S1911. In step S1912, the second cell may reconfigure the UE 100 to receive MBS via Point to Multipoint (PTM). In step S1913, the UE 100 may receive MBS data via PTM. In step S1914, the UE 100 may enter unconnected state and receive MBS via PTM.

See FIG. 19B, which shows the preparation of entering the unconnected state according to an embodiment of the disclosure.

In FIG. 19B, the UE 100 may be served by the second cell. In this case, the UE 100 may receive MBS data via PTP or split MRB in step S1921. In step S1922, the second cell may provide RRC release message used to reconfigure the UE 100 to receive MBS via PTM.

In step S1914, the UE 100 may enter unconnected state and receive MBS via PTM.

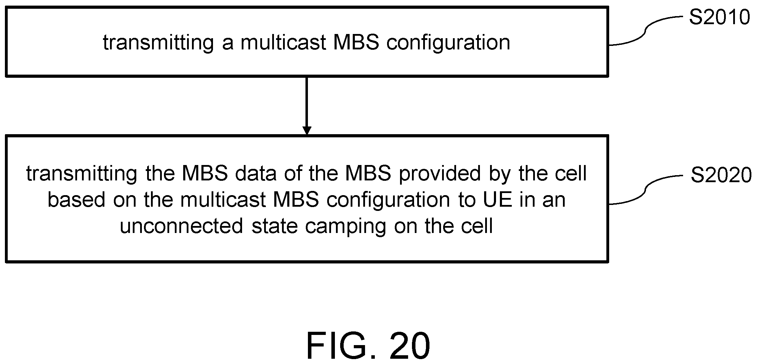

See FIG. 20, which shows a flow chart of the method of a cell providing an MBS data according to an embodiment of the disclosure. The method in FIG. 20 may be performed by a cell (e.g., a base station operating the cell), which may be the first cell and/or the second cell in the above embodiments, but the disclosure is not limited thereto.

In step S2010, the cell transmits a multicast MBS configuration. In step S2020, the cell transmits the MBS data of the MBS provided by the cell based on the multicast MBS configuration to UE in an unconnected state camping on the cell.

In one embodiment, the step of transmitting the multicast MBS configuration includes: transmitting multicast-MBS Control Channel (MCCH) scheduling information, and transmitting the multicast MBS configuration according to the multicast-MCCH scheduling information.

In one embodiment, the step of transmitting the multicast MBS configuration according to the multicast-MCCH scheduling information includes: configuring an MCCH based on the multicast-MCCH scheduling information, wherein the MCCH carries the multicast MBS configuration; and transmitting the multicast MBS configuration via the MCCH.

In one embodiment, the step of transmitting the multicast-MCCH scheduling information includes: providing the multicast-MCCH scheduling information via a dedicated message in a connected state, wherein the cell serves the UE in the connected state.

In one embodiment, the step of transmitting the multicast MBS configuration according to the multicast-MCCH scheduling information includes: providing the multicast MBS configuration according to the multicast-MCCH scheduling information during the UE being in the unconnected state.

In one embodiment, the step of transmitting the multicast MBS configuration includes: transmitting the multicast MBS configuration via a dedicated message in a connected state, wherein the cell serves the UE in the connected state.

In one embodiment, the method further includes: providing a reference multicast MBS configuration in response to a request from the UE, wherein the request is performed by using a reserved random access resource; providing the reference multicast MBS configuration via at least one of a random access response, a resume message, and a release message corresponding to the reserved random access resource, wherein the reference multicast MBS configuration triggers the UE to apply the reference multicast MBS configuration (e.g., update the multicast MBS configuration based on the reference multicast MBS configuration).

In one embodiment, the reserved random access resource includes at least one of a first reserved random access preamble and a reserved random access occasion.

In one embodiment, the method further includes: receiving a random access preamble from the UE; transmitting a random access response corresponding to the random access preamble to the UE; receiving a resume request from the UE, wherein the resume request requests the cell to provide a new multicast MBS configuration; transmitting the reference multicast MBS configuration to the UE via at least one of a resume message and a release message corresponding to the resume request, wherein the reference multicast MBS configuration triggers the UE to apply the reference multicast MBS configuration (e.g., update the multicast MBS configuration based on the reference multicast MBS configuration).

In one embodiment, the method further includes: receiving a second reserved random access preamble from the UE, wherein the second reserved random access preamble informs the cell that the UE intends to indicate an interested (e.g., specific) multicast MBS configuration among at least one of candidate multicast MBS configuration; transmitting a random access response corresponding to the second reserved random access preamble to the UE; receiving a resume request from the UE in response to the random access response, wherein the resume request indicates the interested multicast MBS configuration; transmitting the interested multicast MBS configuration to the UE via at least one of a resume message and a release message corresponding to the resume request, wherein the interested multicast MBS configuration triggers the UE to apply the interested multicast MBS configuration (e.g., update the multicast MBS configuration based on the interested multicast MBS configuration).

In one embodiment, the method further includes: transmitting a status signal to the UE, wherein the status signal includes a status of a reference multicast MBS configuration associated with the MBS.

In one embodiment, the MBS data of the MBS is transmitted to the UE based on a downlink control information (DCI), wherein the DCI carries a change notification in a case where the reference multicast MBS configuration has been updated.

In one embodiment, the method further includes: transmitting a status signal to the UE, wherein the status signal includes a status of a reference multicast MBS configuration associated with the MBS, wherein the status includes a version shared by a plurality of reference MBSs.

In one embodiment, the method further includes: transmitting a status signal to the UE, wherein the status signal includes a status of a reference multicast MBS configuration associated with the MBS, wherein the status includes a version dedicated to the MBS.

The details of the embodiments associated with FIG. 20 can be referred to the above embodiments, which would not be repeated herein.

To sum up, the embodiments of the disclosure provide solutions for the UE to acquire the multicast-MCCH scheduling information or the multicast MBS configuration from the last serving cell. In this case, even if the UE camps on other cells after entering the unconnected state, the UE can still obtain the MBS data based on the multicast-MCCH scheduling information or the multicast MBS configuration without switching to the connected state. Accordingly, the power efficiency of the UE can be improved.

## Claims

1. A method of user equipment, UE, receiving a multicast multicast/broadcast service, MBS, data, **characterized in** comprising:
receiving (S210) a multicast MBS configuration, wherein the multicast MBS configuration is associated with an MBS provided by a first cell; and
in response to determining that the UE in an unconnected state camping on the first cell, receiving (S220), from the first cell, the MBS data of the MBS provided by the first cell based on the multicast MBS configuration.

2. The method according to claim 1, wherein the step of receiving (S210) the multicast MBS configuration comprises:
receiving multicast-MBS Control Channel, MCCH, scheduling information, and
receiving the multicast MBS configuration according to the multicast-MCCH scheduling information.

3. The method according to claim 2, wherein the step of receiving the multicast MBS configuration according to the multicast-MCCH scheduling information comprises at least one of a first operation and a second operation, the first operation comprising:
monitoring an MCCH based on the multicast-MCCH scheduling information, wherein the MCCH carries the multicast MBS configuration; and
receiving the multicast MBS configuration via the MCCH; and the second operation comprising:
receiving, from the first cell, the multicast MBS configuration according to the multicast-MCCH scheduling information during the UE being in the unconnected state.

4. The method according to claim 2, wherein the step of receiving the multicast-MCCH scheduling information comprises:
receiving (S413), from a second cell, the multicast-MCCH scheduling information via a dedicated message in a connected state, wherein the second cell serves the UE in the connected state.

5. The method according to claim 2, wherein before the step of receiving (S417) the multicast MBS configuration according to the multicast-MCCH scheduling information, the method further comprises:
determining (S512) whether the multicast-MCCH scheduling information is valid;
in response to determining that the multicast-MCCH scheduling information is valid, receiving (S521) the multicast MBS configuration according to the multicast-MCCH scheduling information;
in response to determining that the multicast-MCCH scheduling information is invalid, updating the multicast-MCCH scheduling information via an enhanced random access procedure and accordingly receiving the multicast MBS configuration.

6. The method according to claim 1, wherein the step of receiving (S210) the multicast MBS configuration comprises:
receiving (51113), from a second cell, the multicast MBS configuration via a dedicated message in a connected state, wherein the second cell serves the UE in the connected state.

7. The method according to claim 1, wherein before the step of receiving (S220), from the first cell, the MBS data of the MBS provided by the first cell based on the multicast MBS configuration, the method further comprises:
determining (S1212) whether the multicast MBS configuration is valid;
in response to determining that the multicast MBS configuration is valid, receiving (S1221) the MBS data according to the multicast MBS configuration; and
in response to determining that the multicast MBS configuration is invalid, updating the multicast MBS configuration via an enhanced random access procedure and accordingly receiving the MBS data, wherein the UE does not enter the connected state in response to the enhanced random access procedure.

8. The method according to claim 7, wherein the step of updating the multicast MBS configuration via the enhanced random access procedure comprises:
requesting the first cell to provide a reference multicast MBS configuration by using a reserved random access resource;
receiving the reference multicast MBS configuration from the first cell via at least one of a random access response, a resume message, and a release message corresponding to the reserved random access resource; and
applying the reference multicast MBS configuration while staying in the unconnected state.

9. The method according to claim 8, wherein the reserved random access resource comprises at least one of a first reserved random access preamble and a reserved random access occasion, and the step of requesting the first cell to provide the reference multicast MBS configuration by using the reserved random access resource comprises at least one of the following steps:
requesting the first cell to provide the reference multicast MBS configuration by transmitting the first reserved random access preamble to the first cell; and
requesting the first cell to provide the reference multicast MBS configuration by using the reserved random access occasion to transmit a random access preamble to the first cell.

10. The method according to claim 7, wherein the step of updating the multicast MBS configuration via the enhanced random access procedure comprises one of a third operation and a fourth operation, the third operation comprising:
transmitting a random access preamble to the first cell;
receiving a random access response corresponding to the random access preamble from the first cell;
transmitting a resume request to the first cell, wherein the resume request requests the first cell to provide a new multicast MBS configuration;
receiving a reference multicast MBS configuration from the first cell via at least one of a resume message and a release message corresponding to the resume request; and
applying the reference multicast MBS configuration while staying in the unconnected state; and
the fourth operation comprising:
transmitting a second reserved random access preamble to the first cell, wherein the second reserved random access preamble informs the first cell that the UE intends to indicate an interested multicast MBS configuration among at least one of candidate multicast MBS configuration;
receiving a random access response corresponding to the second reserved random access preamble from the first cell;
transmitting a resume request to the first cell in response to the random access response, wherein the resume request indicates the interested multicast MBS configuration;
receiving the interested multicast MBS configuration from the first cell via at least one of a resume message and a release message corresponding to the resume request; and
applying the interested multicast MBS configuration while staying in the unconnected state.

11. The method according to claim 7, wherein the step of determining whether the multicast MBS configuration is valid comprises:
receiving a status signal from the first cell, wherein the status signal comprises a status of a reference multicast MBS configuration associated with the MBS;
in response to determining that a status of the multicast MBS configuration is consistent with the status of the reference multicast MBS configuration, determining that the multicast MBS configuration is valid; and
in response to determining that the status of the multicast MBS configuration is not consistent with the status of the reference multicast MBS configuration, determining that the multicast MBS configuration is invalid.

12. The method according to claim 11, wherein the MBS data of the MBS is received by the UE based on a downlink control information, DCI, and the method further comprises:
determining whether the DCI carries a change notification, wherein the change notification indicates that the reference multicast MBS configuration has been updated; and
in response to determining that the DCI carries the change notification, requesting the first cell to provide the reference multicast MBS configuration.

13. The method according to claim 12, further comprising:
in response to determining that the DCI is not lost, ignoring another status signal from the first cell; and
in response to determining that the DCI is lost, acquiring the another status signal from the first cell.

14. The method according to claim 1, further comprising:
receiving a status signal from the first cell, wherein the status signal comprises a status of a reference multicast MBS configuration associated with the MBS, wherein the status comprises at least one of a first version shared by a plurality of reference MBSs and a second version dedicated to the MBS.

15. User equipment, UE, (100), **characterized in** comprising:
a transceiver (102);
a processor (104), coupled to the transceiver (102) and performing:
controlling the transceiver (102) to receive (S210) a multicast multicast/broadcast service (MBS) configuration, wherein the multicast MBS configuration is associated with an MBS provided by a first cell; and
in response to determining that the UE (100) in an unconnected state camping on the first cell, controlling the transceiver (102) to receive (S220), from the first cell, an MBS data of the MBS provided by the first cell based on the multicast MBS configuration.

16. A method of a cell providing a multicast multicast/broadcast service, MBS, data, **characterized in** comprising:
transmitting (S2010) a multicast MBS configuration, wherein the multicast MBS configuration is associated with an MBS provided by the cell; and
transmitting (S2020) the MBS data of the MBS provided by the cell based on the multicast MBS configuration to user equipment, UE, in an unconnected state camping on the cell.

17. The method according to claim 16, wherein the step of transmitting the multicast MBS configuration comprises:
transmitting multicast-MBS Control Channel, MCCH, scheduling information, and
transmitting the multicast MBS configuration according to the multicast-MCCH scheduling information.

18. The method according to claim 17, wherein the step of transmitting the multicast MBS configuration according to the multicast-MCCH scheduling information comprises at least one of a first operation and a second operation, the first operation comprising:
configuring an MCCH based on the multicast-MCCH scheduling information, wherein the MCCH carries the multicast MBS configuration; and
transmitting the multicast MBS configuration via the MCCH; and
the second operation comprising:
providing the multicast MBS configuration according to the multicast-MCCH scheduling information during the UE being in the unconnected state.

19. The method according to claim 17, wherein the step of transmitting the multicast-MCCH scheduling information comprises:
providing the multicast-MCCH scheduling information via a dedicated message in a connected state, wherein the cell serves the UE in the connected state.

20. The method according to claim 16, wherein the step of transmitting the multicast MBS configuration comprises:
transmitting the multicast MBS configuration via a dedicated message in a connected state, wherein the cell serves the UE in the connected state.

21. The method according to claim 16, further comprising:
providing a reference multicast MBS configuration in response to a request from the UE, wherein the request is performed by using a reserved random access resource;
providing the reference multicast MBS configuration via at least one of a random access response, a resume message, and a release message corresponding to the reserved random access resource, wherein the reference multicast MBS configuration triggers the UE to apply the reference multicast MBS configuration.

22. The method according to claim 21, wherein the reserved random access resource comprises at least one of a first reserved random access preamble and a reserved random access occasion.

23. The method according to claim 16, further comprising:
receiving a random access preamble from the UE;
transmitting a random access response corresponding to the random access preamble to the UE;
receiving a resume request from the UE, wherein the resume request requests the cell to provide a new multicast MBS configuration;
transmitting a reference multicast MBS configuration to the UE via at least one of a resume message and a release message corresponding to the resume request, wherein the reference multicast MBS configuration triggers the UE to apply the reference multicast MBS configuration.

24. The method according to claim 16, further comprising:
receiving a second reserved random access preamble from the UE, wherein the second reserved random access preamble informs the cell that the UE intends to indicate an interested multicast MBS configuration among at least one of candidate multicast MBS configuration;
transmitting a random access response corresponding to the second reserved random access preamble to the UE;
receiving a resume request from the UE in response to the random access response, wherein the resume request indicates the interested multicast MBS configuration;
transmitting the interested multicast MBS configuration to the UE via at least one of a resume message and a release message corresponding to the resume request, wherein the interested multicast MBS configuration triggers the UE to apply the interested multicast MBS configuration.

25. The method according to claim 16, further comprising:
transmitting a status signal to the UE, wherein the status signal comprises a status of a reference multicast MBS configuration associated with the MBS.

26. The method according to claim 25, wherein the MBS data of the MBS is transmitted to the UE based on a downlink control information, DCI, wherein the DCI carries a change notification in a case where the reference multicast MBS configuration has been updated.

27. The method according to claim 16, further comprising:
transmitting a status signal to the UE, wherein the status signal comprises a status of a reference multicast MBS configuration associated with the MBS, wherein the status comprises at least one of a first version shared by a plurality of reference MBSs and a second version dedicated to the MBS.
